# EUROPEAN PATENT SPECIFICATION

(11) **EP 4 605 622 B1**
(45) Date of publication and mention of the grant of the patent: **11.11.2026**
(21) Application number: 23783917.0
(22) Date of filing: 06.10.2023
(51) Int. Cl.: E06B 3/66, E06B 3/663, E06B 3/673, E06B 3/677

(54) **IN SITU DEFORMATION OF SUPPORT STRUCTURES FOR VACUUM INSULATING GLASS UNITS**
IN-SITU-VERFORMUNG VON STÜTZSTRUKTUREN FÜR VAKUUMISOLIERVERGLASUNGEN
DÉFORMATION IN SITU DE STRUCTURES DE SUPPORT POUR UNITÉS DE VERRE ISOLANT SOUS VIDE

(30) Priority: 19.10.2022 EP 22202420; 19.10.2022 EP 22202423; 19.10.2022 EP 22202427; 19.10.2022 EP 22202431; 27.02.2023 EP 23158700
(43) Date of publication of application: 27.08.2025
(73) Proprietor: VKR Holding A/S, 2970 Hørsholm (DK)
(72) Inventor: JOHNSEN, Simon, 2970 Hørsholm (DK); KRISTO, Annette Johncock, 2970 Hørsholm (DK); JENSEN, Henrik Aslak, 2970 Hørsholm (DK)
(74) Representative: Høiberg P/S
(86) International application number: PCT/EP2023/077727
(87) International publication number: WO 2024/083528

(56) References cited:
- DE-A1- 102010 021 127
- US-A1- 2019 106 931
- US-B1- 6 689 241

## Description

The present disclosure relates to a method of producing a vacuum insulated glass unit, and to a vacuum insulated glass unit.

### Background

Vacuum insulating glass (VIG) units provides several advantages. For example, VIG units may provide superior heat insulation properties when compared to weight and material use of the unit. In order to provide a sufficiently low pressure in an evacuated gap of the VIG unit, a pump evacuates the gap before sealing the gap. To prevent the glass sheets enclosing the evacuated gap from touching during and after gap evacuation, support structures, also known as pillars or spacers, are distributed in the evacuated gap, often in a predefined pattern.

US 6, 689, 241 B1 discloses a solution where stainless steel balls are used as support structures/spacers in an evacuated gap of a VIG unit, where the balls are rolled over a glass sheet surface and adheres to adhesive dots. US 6,261,652 discloses a solution where ceramic spacers/support structures are used in an evacuated gap. Other patent documents discloses different support structures/spacers for evacuated gap of a VIG unit, where these comprises predefined contact surfaces.

The present disclosure may e.g. improve cost efficiency of VIG units with good heat insulating properties. The present disclosure may additionally provide advantages in relation to obtaining an advantageous VIG unit manufacturing solution.

### Summary

The present disclosure relates to a method of producing a vacuum insulated glass (VIG) unit according to a first aspect.

The method according to the first aspect comprises the features of appended claim 1.

Modern **VIG** units may be produced with a reduced pressure in the evacuated gap below 0.005 millibar such as substantially 0.001 millibar or below. This provides superior heat insulating capabilities. The atmosphere may exhibit a pressure of 10 tons per square meter evacuated VIG. Manufacturing such **VIG** units often comprises use of support structures having predefined, plane contact surfaces. The inventor has realized that handing support structures having predefined, plane contact surfaces prior to arranging these at the glass sheet may be complex and/or time consuming and may increase the risk of jamming or inducing other issues at support structure placement/handling equipment. The solution of the present disclosure provides advantages with regards to e.g. handling of the support structures during **VIG** unit manufacturing prior to the deformation, e.g. in embodiments where the support structures comprises spherical balls. Spherical balls may be less likely to jam or in other ways provide issues when handling the balls prior to arranging and during arranging the balls at the first major surface, when compared to support structures/spacers having predefined, such as flat, contact surfaces.

Tempered glass sheets, such as thermally tempered glass sheets, provides improved glass sheet strength, thereby enabling providing a larger mutual distance between adjacent support structures, which may e.g. help to reduce the visibility of the support structures to the human eye, or reduce the risk that the human eye will notice the support structures. This is a feature that may be considered relevant in order to compete with the visual impression of gas filled, conventional insulating glass units where no support structures are used in the gas filled gap.

The present inventor has found that solid spherical balls, for example solid spherical steel balls, already exist on the market and may be relevant subjects as gap spacers/support structures in VIG units. Such balls are often even available with tight tolerances and are cost efficient.

The present inventor has surprisingly found that utilization of solid, spherical balls between glass sheet where these are arranged with a rather large mutual distance of 30 mm or above and providing the desired vacuum of below 0.005 millibar, may provide a plastic deformation of the solid balls by means of the atmosphere so that the balls adapt to the surface topology of the glass sheets.

The plastic deformation provides an individual shaping and adaption of contact surfaces of the solid support structures, such as spherical, solid balls, at the individual location by means of the glass sheets compressing the balls in the gap due to the atmospheric pressure gradually increasing as the gap is gradually evacuated. The present inventor found that deformation of spherical, solid balls, even though the initial contact surface of the balls touching the glass surfaces is small, may not inflict critical damages to the tempered glass sheets at the spots where the support structures was placed when the pressure in the gap was gradually dropped by means of the pump. The plastic deformation may help to increase contact surface area of the support structure(s) and also provide an advantageous adaption to surface variations of the major glass surfaces. Hence the inventor found that intentionally providing a plastic deformation of solid, spherical balls in situ by means of providing vacuum during VIG unit production and gap evacuation may provide a solution that is both cost efficient and compatible with obtaining a desired low pressure in the evacuated gap of below 0.005 mbar or below 0.004 mbar, such as to below 0.002 mbar without compromising the vacuum integrity of the VIG unit.

Also, the present disclosure provides a solution that enables providing a desirable aesthetic VIG unit appearance due to increased mutual support structure distance when using tempered glass sheets and provides a solution that may reduce manufacturing issues prior to arranging the support structures at the glass sheet surface.

In one or more embodiments of the present disclosure, the solid spherical balls may comprises or consist of metal such as steel, such as a monolithic steel structure.

The inventor has found that such steel balls may both have advantageous mechanical properties and be cost efficient since such balls may already be available on the market or may be cost-efficient to produce.

Also, such balls may have the advantages of being available with rather tight tolerances relating to the deviation form a complete spherical shape.

It has come to the inventor's attention that spherical balls, such as solid spherical balls, such as solid steel balls are available "off the shelf" which are precisely manufactured and hence may serve as candidates for use as support structures for VIG units. Such balls are also known as "precision balls". Cost efficient precision balls are available on the market with a nominal diameter less than 1 mm, such as less than 600 um, and even around 400 um or lower nominal diameter.

In other embodiments of the present disclosure, the solid spherical balls may comprise or consist of a polymer.

In one or more embodiments of the present disclosure, the material of the solid support structures, such as solid, spherical balls , may have a Youngs modulus between 170 Gpa and 280 GPA, such as between 180 GPa and 230 GPa at 20°C.

Such support structures, such as solid spherical balss balls, may provide desired/acceptable properties that may make them suitable for use in VIG units.

In one or more embodiments of the present disclosure, the mutual distance between adjacent support structures at the glass sheet surface may be between 30 mm and 60 mm such as between 35 mm and 45 mm, for example between 38 mm and 42 mm.

Dependent on the mutual support structure, the load subjected at each support structure may vary. For example, smaller mutual support structure distance may provide a load of between 7 and 11 kg at each support structure whereas larger mutual support structure distance may provide a load of between 23 and 28 kg at each support structure. In embodiments of the present disclosure, the support structure distance may be adapted so that the load acting at each support structure may be between 7 kg and 30 kg, such as between 12 kg and 20 kg, for example between 14 kg and 18 kg

In one or more embodiments of the present disclosure, wherein the material of the support structures such as the solid, spherical balls may have a yield stress of less than 600 MPa, such as less than 530 MPa, for example less than 480 MPa at 20°C

In one or more embodiments of the present disclosure, all solid spherical balls (10) at the major glass sheet surface is of the same diameter ± tolerances.

In embodiments of the present disclosure, said tolerances may be within ±200 um, such as within ±100 um, such as within ±50 um, for example within ±20 um.

In one or more embodiments of the present disclosure, a plurality of said plastically deformed support structures comprises a first convex side surface and a second opposite, convex side surface when seen in a cross section of the plastically deformed support structure, where said convex side surfaces extends between the major glass sheet surfaces.

The side surfaces of solid spherical balls may adapt due to the plastic deformation so that the side surface curvature of the convex sides describes smaller circles than before the deformation. When providing the vacuum by means of the pump, it has shown that the side surfaces changes shape from the initial shape where each side surface was so to say part of the same circle, i.e. the outer surface of the spherical ball. When deforming the balls, the side surfaces may tend to change surface curvature into substantially circular arcs that may each have a centre between the major glass sheet surfaces , and where these centres may be non-coinciding. This may be provided in response to increasing the contact area of the contact surfaces of the support structures.

The cross section may be provided in a cross sectional plane extending through a centre portion of the contact surfaces and extending substantially perpendicular to a plane defined by the major surfaces of the glass sheets facing the gap.

In some embodiments of the present disclosure, the non-coinciding centres may have a mutual distance of at least 3% of the initial diameter of the spherical ball, such as a mutual distance of at least 10% of the initial diameter of the spherical ball, such as a mutual distance of at least 20% or at last 35% of the initial diameter of the spherical ball.

In one or more embodiments of the present disclosure, the convex side surfaces may each describes minor, circular arcs having non-coinciding centres, such as as a result of the plastic deformation.

It may in embodiments of the present disclosure be so that at least 80%, such as at least 90%, for example at least 95% of the length of each minor circular arc is coinciding with the circle periphery of the respective circle.

In one or more embodiments of the present disclosure, a plurality of said plastically deformed support structures may comprise a first convex side surface and a second opposite, convex side surface when seen in a cross section of the plastically deformed support structure. These convex side surfaces may extend between the major glass sheet surfaces.

In embodiments of the present disclosure and the radius of each of the circles comprising each their convex side surface may be is at least 10%, such as at least 20%, such as at least 30%, smaller than the radius of the initial solid spherical ball before the deformation.

It is found that the curvature of the side surfaces may change during deformation of the spherical balls and that this may cause a reduction of the radius of a circle comprising the respective convex side surface when compared to the radius of the initial solid spherical ball. This may be a result of an automatic adaption and enlargement of the contact surfaces of the individual support structures when plastically deforming these by reducing the pressure in the gap.

In one or more embodiments of the present disclosure, the radius of each of said circles comprising each their convex side surface may be between 10% and 70%, such as between 20% and 70%, such as between 30% and 60%, smaller than the radius of the initial solid spherical ball before said deformation by means of the pump.

In one or more embodiments of the present disclosure, the envisages circles substantially comprising each their convex side surface may each have a diameter that is larger than the reduced support structure height.

In one or more embodiments of the present disclosure, the maximum width of each of a plurality of the support structures in the gap after the plastic deformation may be larger than the initial diameter of the solid spherical balls before the plastic deformation. In some embodiments of the present disclosure, the maximum width may be at least 10% larger, for example 20 % larger, for example at least 40% larger, than the initial diameter of the solid spherical balls before the plastic deformation.

In one or more embodiments of the present disclosure, the maximum width of each of a plurality of the support structures in the gap after the plastic deformation is at least 20% larger, such as at least 40% larger, for example at least 60% larger than the initial diameter of the solid spherical balls before the plastic deformation.

In one or more embodiments of the present disclosure, the maximum width of each of a plurality of the support structures in the gap after the plastic deformation may be between 3% and 120%, such as between 5% and 85%, for example between 20% and 65% larger than the initial diameter of the solid spherical balls before the plastic deformation.

In one or more embodiments of the present disclosure, the tempered glass sheets are thermally tempered glass sheets.

Such glass sheets provides the advantage of being cost efficient and very strong when compared to annealed glass sheets. This provides advantages with regards to providing a cost efficient VIG unit with larger mutual support structure distances.

However, such thermally tempered glass sheets may suffer from slightly uneven surface variations due to so-called roller waves originating from the production of the glass sheets and other out of flatness effects. The surface variations may even get above 0.1 mm and in some occasions, also more "global" surface variations may be present when looking at the curvature of the thermally tempered glass sheets.

In one or more embodiments, the thermally tempered glass sheets have an out of flatness deflection of at least 0,1mm or more.

The present inventor has however found that using spherical balls as support structures may enable advantageous plastic adaption of the balls to the individual characteristic of the thermally tempered glass sheets that are paired to provide a VIG unit. This May reduce need determining surface characteristic of the glass sheets, and may even make such determination superfluous.

In one or more embodiments of the present disclosure, an evacuation pump provides a part of said reduction of the initial height during evacuation of the gap. In some further embodiments, an evacuation pump may provide substantially the entire reduction of the initial height of the spherical ball, during evacuation of the gap.

In one or more embodiments of the present disclosure, a plurality of the support structures are subjected to varying plastic deformation in response to surface unevenness of the thermally tempered glass sheets so as to have different reduced heights. For example, in further embodiments of the present disclosure, a plurality of the plastically deformed support structures may have difference in reduced height of at least 0.02 mm, such as at least 0.05 mm, for example at least 0.08 mm.

This provides a solution where the reduced support structure heights are individually adapted, e.g. in order to adapt to the surface characteristic/topology of the major surfaces of the glass sheets, for example surface unevenness resulting from the production of the thermally tempered glass sheets, for example roller waves resulting from production of thermally tempered glass sheets.

**In** one or more embodiments of the present disclosure, wherein the solid spherical balls may be are maintained in position at the first major surface by means of a support structure maintaining arrangement, such as a temporary support structure maintaining arrangement. **In** further embodiments of the present disclosure, the support structure maintaining arrangement may be arranged external to the gap. **In** additional or alternative embodiments, the temporary support structure maintaining arrangement may comprise comprises a magnetic maintaining arrangement, and/or a template.

This may e.g. provide a more advantageous manufacturing solution such as a more simple and/or reliable manufacturing solution. Also it may reduce or remove the need for adhesive solutions at the support structure positions for adhering the support structures to the first major surface.

**If** the temporary support structure maintaining arrangement is configured to maintain the spherical balls in position at the major glass sheet surface, it is understood that the solid balls may comprise a ferromagnetic material.

**In** some embodiments of the present disclosure, no adhesive may be placed to adhere the solid, spherical balls to the major surface.

**In** one or more embodiments of the present disclosure, the reduced support structure height of a plurality of the support structures in the gap may be between 15% and 95%, such as between 20% and 85%, such as between 30% and 80% of the initial height of the respective solid spherical balls.

**In** one or more embodiments of the present disclosure the reduced support structure height of a plurality of the support structures is between 70% and 98%, such as between 80% and 95% of the initial height of the respective solid spherical balls.

**In** one or more embodiments of the present disclosure the reduced support structure height is the result of/originates from a plastic deformation of the spherical ball. Hence, if the respective support structure was removed from the **VIG** unit gap, e.g. by equalling the gap pressure to atmospheric pressure, the reduced support structure height due to plastic deformation may be maintained.

In one or more embodiments of the present disclosure, at least 10%, such as at least 40%, for example at least 70% of the total amount of spherical balls arranged at the first surface may be plastically deformed to said reduced support structure height (H1).

This may provide an improved individual adaption of the support structures.

In one or more embodiments of the present disclosure, at least 40%, for example at least 70% of the total amount of spherical balls arranged at the first surface may be plastically deformed to said reduced support structure height, wherein said reduced support structure height is between 20% and 85%, such as between 30% and 80% of the initial height of the respective solid spherical balls.

In one or more embodiments of the present disclosure, at least 10%, such as at least 40%, for example at least 70% of the total amount of spherical balls arranged at the first surface may be plastically deformed to a reduced support structure height which is between 15% and 95%, such as between 20% and 85%, such as between 30% and 80% of the initial height of the respective solid spherical balls.

In one or more embodiments of the present disclosure, the surface area of each of the major surfaces of the first and second sheet is larger than 1 m², such as larger than 1.3 m².

In one or more embodiments of the present disclosure, one or both of the tempered glass sheets have a thickness between 2 mm and 6 mm, such as between 2 mm and 4 mm, for example between 2.5 mm and 3.5 mm including both end points

In one or more embodiments of the present disclosure, the solid spherical balls at the major glass sheet surface have a diameter between 0.1 mm and 0.8 mm, such as between 0.2 mm and 0.6 mm, such as between 0.25 mm and 0.45 mm.

In one or more embodiments of the present disclosure, the evacuation of the VIG unit gap is provided by means of a pump to a gap pressure below 0.005 mbar, such as below 0.003 mbar, such as to below 0.002 mbar.

**In** one or more embodiments of the present disclosure, the number of support structures in the evacuated gap is below 1500 support structures per **VIG** unit m², such as below 900 support structures per **VIG** unit m², for example below 700 support structures per **VIG** unit m².

**In** one or more embodiments of the present disclosure, the number of support structures in the evacuated gap is between 200 and 1800 support structures per **VIG** unit m², such as between 300 and 1300 support structures per **VIG** unit m², for example between 280 and 800 support structures per **VIG** unit m².

**In** one or more embodiments of the present disclosure, at least a part of the plastic deformation, such as substantially the entire plastic deformation, of the support structures, such as solid spherical balls, in the gap by means of said major surfaces may be provided by evacuating the gap in a surrounding pressure such as atmospheric pressure, such as by means of an evacuation pump. This may e.g. provide a fast and efficient adaption of the support structure height.

**In** one or more embodiments of the present disclosure, at least a part of the plastic deformation of the support structures, such as solid spherical balls, by means of said major surfaces may be provided by evacuating the gap in a surrounding pressure such as atmospheric pressure, for example by means of an evacuation pump.

**In** one or more embodiments of the present disclosure, at least a part of the plastic deformation of the solid spherical balls by means of said major surfaces may be provided by means of an external mechanical pressing arrangement configured to provide a compression force to exterior major surfaces of the glass sheets. This may e.g. provide a good control of the support structure deformation and/or an efficient adaption of the support structure height.

**In** one or more embodiments of the present disclosure, at least a part of the plastic deformation of the support structures, such as spherical balls, by means of said major surfaces is provided by means of an external mechanical pressing arrangement configured to provide a compression force to exterior major surfaces of the **VIG** unit assembly such as the glass sheets.

**In** one or more embodiments of the present disclosure, the external mechanical pressing arrangement comprises pressing bodies and one or more actuators. **In** one or more embodiments of the present disclosure, the external mechanical pressing arrangement comprises a hardware controller for controlling the one or more actuators.

**In** one or more embodiments of the present disclosure, the pressing bodies comprises pressing surfaces, wherein one or both pressing bodies is/are configured to move towards and away from the other body so as to increase or reduce the distance between the pressing surfaces, wherein said movement is provided by means of the one or more actuators.

**In** one or more embodiments of the present disclosure, the pressing bodies are arranged opposite to the gap to be evacuated.

**In** one or more embodiments of the present disclosure, the pressing bodies may cover at least 60%, such as at least 90% of the exterior major surfaces of the glass sheets.

**In** one or more embodiments of the present disclosure, the pressing bodies may cover substantially all of the exterior major surfaces of the glass sheets.

**In** one or more embodiments of the present disclosure, substantially the entire plastic deformation of the support structures by means of said major surfaces is provided by means of the external mechanical pressing arrangement.

It is generally to be understood that in some embodiments of the present disclosure, the provided solid support structures may have another shape than spherical and may hence not be spherical balls. Hence, in one or more of the above mentioned embodiments where the support structures are mentioned as comprising solid, spherical balls, it is understood that in further embodiments of the present disclosure, the provided support structures may be solid support structures having another shape than spherical. Here, the plastic deformation of the provided solid support structures by means of said major surfaces may hence be provided to solid, such as monolithic, support structures of another shape than spherical balls. **In** some embodiments, the solid support structures of another shape than spherical balls may have a rectangular shape, a conical shape, e.g. the shape of a frustum of a cone or frustum of a pyramid, the shape of a cylinder and/or the like.

In one or more embodiments of the present disclosure, the maximum width of the support structure may be at least 1.3 times, such as at least 1.5 times or at least 1.8 times larger than the height of the support structure. This may be provided due to the deformation by means of the glass sheet surfaces.

In one or more embodiments of the present disclosure, the maximum width of the support structures may be at least 2 times larger, such as at least 2.4 times larger or at least 2.8 times larger than the height of the support structures. This may be provided due to the deformation by means of the glass sheet surfaces.

According to the present invention, the contact surfaces of the support structures are provided and shaped by the glass sheets so as to extend at least partly into the respective glass sheet surface. This e.g. allows for an individual adaption of the support structure to the local conditions.

In one or more embodiments of the present disclosure, said contact surfaces may extend into the glass sheet surfaces as a consequence of evacuating the gap by means of an evacuation pump.

In one or more embodiments of the present disclosure, said contact surfaces may extend at least partly into the respective glass sheet surfaces as a consequence of the compression force exerted to exterior major surfaces of a VIG unit assembly comprising said glass sheets by means of the external mechanical pressing arrangement.

In one or more embodiments of the present disclosure, the contact surfaces of the support structure may be forced into a compressive stress zone of the glass sheet, thereby causing a recess in the respective major surface into the compressive stress zone CZ proximate the gap.

The present disclosure moreover relates to a vacuum insulated glass (VIG) unit according to a second aspect. The VIG unit according to the second aspect comprises the features of appended claim 16.

A **VIG** unit as defined above may be cost efficient and/or more easy to produce while still obtaining a **VIG** unit with desired support structure distance. The support structures may be made from solid, cost efficient spherical balls such as steel balls, such as precision balls. Such balls may be gradually plastically deformed by the atmosphere when a pump evacuates the gap, and hence, the deformation may adapt to the surface topology at the respective support structure location.

**In** one or more embodiments of the second aspect, the plastically deformed support structures have different heights, wherein the difference in height is at least 0.02 mm, such as at least 0.05 mm, for example at least 0.08 mm.

Such height variations may be provided dependent on the surface variation of the tempered, such as thermally tempered, glass sheets.

**In** one or more embodiments of the second aspect, the pressure in the gap may be below 0.05 mbar, such as below 0.005 mbar, such as below 0.003 mbar.

**In** one or more embodiments of the second aspect, the maximum width of the support structures may be at least 1.3 times, such as at least 1.5 times or at least 1.8 times larger than the height of the support structure .

**In** one or more embodiments of the present disclosure, the vacuum insulated glass unit is made by means of a method according to one or more of the above mentioned embodiments. In one or more embodiments, the plastic deformation of the support structures is caused by atmospheric pressure in response to evacuation of the gap.

### Figures

Aspects of the present disclosure will be described in the following with reference to the figures in which:
- figs. 1a-1c: : illustrates manufacturing of a vacuum insulated glass unit according to embodiments of the present disclosure,
- fig. 2: : illustrates a cross section of a part of a VIG unit during evacuation of a gap according to embodiments of the present disclosure,
- fig. 3: : illustrates contact surfaces extending partly into a glass sheet surface of a VIG unit, according to the present invention,
- fig. 4: : illustrates a support structure having a maximum width according to embodiments of the present disclosure,
- fig. 5: : illustrates a VIG unit with support structures having different heights, according to embodiments of the present disclosure,
- figs. 6a-8: : illustrates microscopic images of VIG unit support structures according to various embodiments of the present disclosure,
- figs. 9a-9e: : illustrates a spherical, solid ball deformed by different loads, according to embodiments of the present disclosure,
- fig. 10: : illustrates support structures on a glass sheet surface according to embodiments of the present disclosure,
- fig. 11: : illustrates a VIG unit manufacturing line according to embodiments of the present disclosure, and
- fig.. 12: : illustrates manufacturing of a vacuum insulated glass unit according to embodiments of the present disclosure, where support structures are deformed by means of a mechanical pressing arrangement.

### Detailed description

In relation to the figures described below, where the present disclosure may be described with reference to various embodiments, without limiting the same, it is to be understood that the disclosed embodiments are merely illustrative of the present disclosure that may be embodied in various and alternative forms. The figures are not to scale; some features may be exaggerated or minimized to show details of particular components. Therefore, specific structural and functional details disclosed herein are not to be interpreted as limiting, but merely as a representative basis for e.g. teaching one skilled in the art to variously employ the present disclosure.

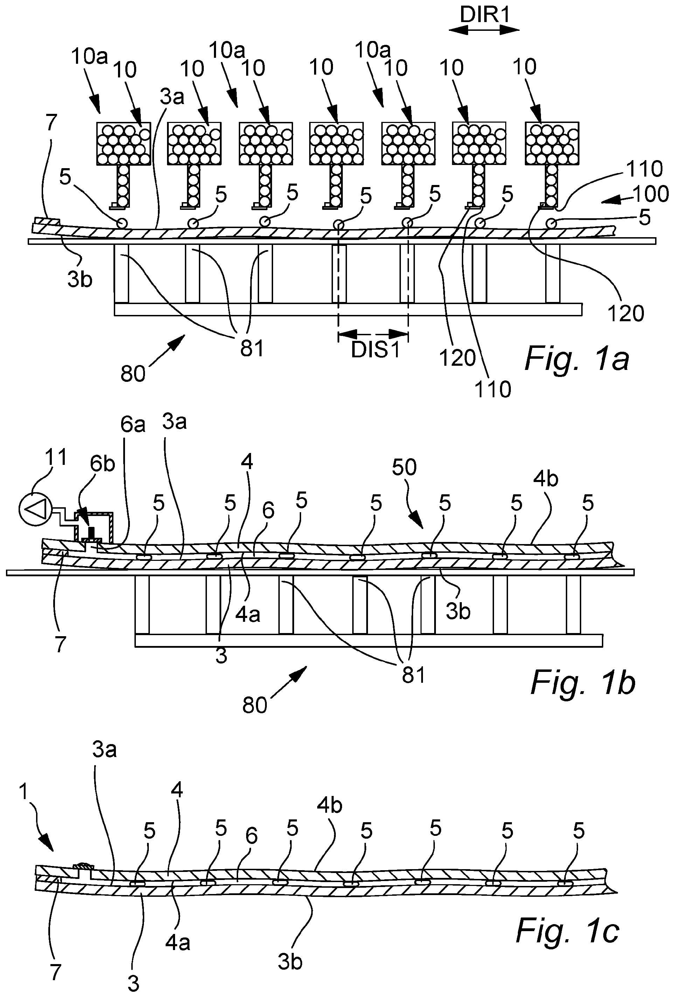

Figs. 1a-1c illustrates schematically embodiments of the present disclosure relating to manufacturing a vacuum insulated glass unit.

In fig. 1a, a plurality of support structures 5 are distributed at a major surface first tempered glass sheet 3 so that the support structures 5 supports on a first major surface 3a of the tempered glass sheet 3. The support structures 5, may also be called spacers or pillars.

The support structures 5 are placed with a mutual distance DIS1 at the surface 3a. This distance DIS1 may in embodiments of the present disclosure be at least 30 mm, for example it may be between 30 mm and 60 mm.

The support structures are solid spherical balls 5. In embodiments of the present disclosure, the solid spherical balls 10 may comprise or consist of metal such as steel, such as a monolithic steel structure. The balls may or may not be ferromagnetic. In other embodiments of the present disclosure, the solid spherical balls 10 may comprise or consist of a polymer.

In some embodiments of the present disclosure, the material of the solid, spherical balls may have a Youngs modulus between 170 Gpa and 280 GPA, such as between 180 GPa and 230 GPa at 20°C. In embodiments of the present disclosure, the material of the solid, spherical balls may have a yield stress of less than 600 MPa, such as less than 530 MPa, for example less than 480 MPa at 20°C.

The balls 10 may in embodiments of the present disclosure have a diameter D1 of less than 0.6 mm, such as less than 0.5 mm, for example less than 0.4 mm. In embodiments of the present disclosure, the diameter D1 may be between 0.25 mm and 1.5 mm, such as between 0.25 mm and 1 mm, such as between 0.28 mm and 0.42 mm. In some embodiments, the balls used may be balls having a diameter of 0.30 mm or 0.40 mm.

The balls 10 may in embodiments of the present disclosure have a diameter H2 between 0.1 mm and 0.8 mm, such as between 0.2 mm and 0.6 mm, such as between 0.25 mm and 0.45 mm.

In embodiments of the present disclosure, at least 80%, such as at least 95% such as substantially all solid spherical balls 10 at the major glass sheet surface 3a may be of the same diameter ± tolerances. In embodiments of the present disclosure, said tolerances may be within ±200 um, such as within ±100 um, such as within ±50 um, for example within ±20 um.

Cost efficient precision balls are available on the market with a nominal diameter less than 1 mm, such as less than 600 um, and even around 400 um or lower nominal diameter. At the same time, such precision balls may have good/tight tolerances, for example defined by ISO 3290 relating to features of finished steel balls for roller bearings, and defining different grades of ball bearings.

In embodiments of the present disclosure, tolerances such as ball diameter variations lower than 1 um, (According to some manufacturers corresponding to "Grade G40") such as lower than 0.4 um, (According to some manufacturers corresponding to "Grade G16") may be used as the balls for support structures.

The solid spherical balls 10 are maintained in position at the first major surface 3a by means of a temporary support structure maintaining arrangement 80. In the figs 1a-1c, this support structure maintaining arrangement 80 comprises magnets 81 placed with a mutual distance to provide the mutual support structure 5 distance DIS1 of adjacent support structures 5. Hence, the balls are metal balls and magnetic, and the magnets 81 maintain the balls in the desired place with the desired distance DIS1 through the glass sheet 3.

In other embodiments of the present disclosure (not illustrated), the support structure maintaining arrangement 80 may comprise a template. The template may e.g. comprise predefined, distributed openings for receiving said solid spherical balls and temporarily maintain these at the desired respective location. For example until a magnetic 81 arrangement takes over the position maintenance and/or the spherical balls until the gap evacuation has started.

In still further embodiments, the support structure maintaining arrangement 80 may comprise a liquid or the like that may be placed at the desired position(s) of the surface 3a, and may maintain the balls in place thereby.

It is generally understood that the support structure maintaining arrangement 80 may be considered a temporary support structure maintaining arrangement.

In figs 1a-1b, an array 100 comprising a plurality of outlets 110 is provided. In this embodiments, the outlets 110 are arranged side by side, transverse to a movement direction of the glass sheet 3 (or the array 500) in a direction along the glass sheet surface 3. The outlets 510 are hence arranged e.g. side by side in a dispenser distribution direction DIR1 that may be transverse to the movement direction with which a motor or the like provides a relative displacement between the array and the glass sheet 3 along the glass sheet surface 3a.

The outlets 110 of the array 100 are placed with a mutual distance and may dispense a row of support structures 5 at a time, for example simultaneously, onto the glass sheet surface 3a. The mutual outlet 510 distance may substantially correspond to the distance DIS1 to provide that the support structures are placed with the desired distance.

The array 50 may in embodiments of the present disclosure comprise between 4 outlets 110 and 80 outlets 110, such as between 4 outlets 110 and 50 outlets 110, such as between 6 outlets 110 and 30 outlets 110. Each outlet 110 may be part of/comprised in an individual support structure 5 dispensing system or be provided at a single dispensing system. One or more guiding pipes or the like may guide the balls 10 from a ball storage 10a containing/storing a plurality of balls 10 to the outlet 110.

A movable support structure retainer 120 retains the respective ball 110 until it is desired to be dispensed/dropped towards the surface 3a. The movable retainer 120 may be controlled by means of an actuator such as a linear actuator or a motor (not illustrated). In some embodiments, the retainer 120 may comprise a magnetizing unit or the like if the support structure 5 is magnetic, and then the retainer 120 may or may not be movable.

The balls 10 are dropped or laid onto the surface 3a and maintained in the desired position by means of the maintaining arrangement 80. Then a second tempered glass sheet 4 is arranged so that the distributed support structures 5 are placed in a gap 6 between the first major surface 3a and a second major surfaces 4a of the second tempered glass sheet 4.

An edge seal 7 is provided around the periphery of the glass sheets 3, 4, and the glass sheets are sealed together. The sealing together of the first and second glass sheets 3, 4 may comprise use of an edge seal material 7 such as a solder glass material, e.g. a glass frit material, a solder metal material or the like placed at the glass sheet periphery. **In** other embodiments, dependent on the edge sealing solution for the **VIG** unit, the edge sealing material 7 may be omitted. The glass sheets 3, 4 may e.g. be fused together. **In** some embodiments, the sealing together of the glass sheets may comprise locally heating at least at the edge seal location, or heating the entire **VIG** unit assembly including the support structures to a desired temperature in e.g. a furnace. If the glass sheets are thermally tempered glass sheets, this furnace temperature may be set to be below a temperature where the glass sheets de-tempers. The sealing together of the glass sheet 3, 4 edges may provide a fused, rigid edge seal. Other airtight edge seal solutions may alternatively be provided.

The glass sheets 3, 4 may be thermally tempered glass sheets. One or both glass sheets 3,4 may have a thickness between 2 mm and 6 mm, such as between 2 mm and 4 mm, for example between 2.5 mm and 3.5 mm including both end points. The glass sheets 3, 4 may be of the same or different thickness.

**In** some embodiments of the present disclosure, the surface area of each of the major surfaces 3a, 4a of the first and second sheet 3, 4 may be larger than 1 m², such as larger than 1.3 m².

Thermally tempered glass may have a glass sheet surface 3a with an unevenness of at least 0.1 mm, such as at least 0.2 mm, for example at least 0.3 mm. this may occur due to one or more of glass sheet bowing, glass sheet warp, glass sheet edge lift, roller waves and/or the like that may e.g. occur during tempering of the glass sheet to obtain a thermally tempered glass sheet.

**In** some embodiments, the glass sheet 3, 4 surface 3a, 4a unevenness for each glass may even be equal to or larger than the support structure 5 height.

**In** some embodiments, the glass sheet surfaces 3a, 4a may comprise one or more low-e coatings and/or the like to e.g. provide advantageous/desired heat regulation and/or other functionalities. It is understood that one or both contact surface(s) 5a, 5b may abut such coatings of the glass sheet. **In** other embodiments, the glass sheet surface(s) abutting the contact surface of the support structure may be uncoated.

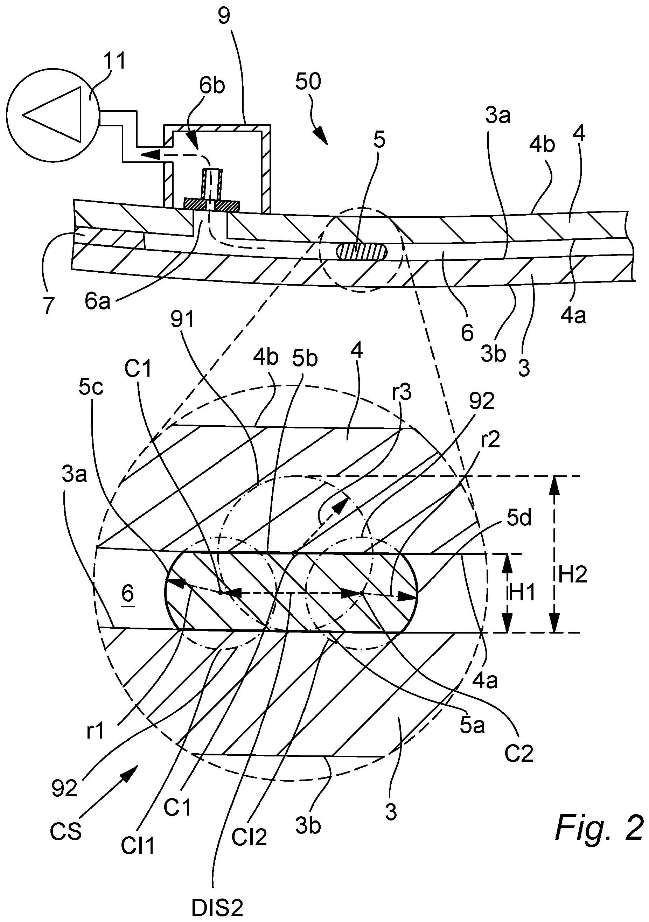

In fig. 1b, a suction cup 9 is in fluid communication with the evacuation pump 11, and the suction cup 9 is placed to cover an evacuation hole in the glass sheet 4, see also fig. 2. The pump 11 evacuates the gap 6 through the evacuation hole 6a by means of the suction cup 9. In other embodiments, a vacuum chamber, such as a vacuum chamber with flexible walls, for containing the entire VIG unit during evacuation may be used instead of the suction cup. During evacuation of the gap 6, the atmosphere hence gradually increased the load on the glass sheets and hence compresses the spherical balls.

After the evacuation, the evacuation outlet/opening 6a is sealed by a sealing 6b, such as at least partly by means of a solder material. In fig. 1b, the sealing 6b comprises a tube and a solder material arranged round the tube, and when these are heated, these parts soften/melt and seals the gap 6.

The evacuation hole 6a in a glass sheet of the VIG unit assembly may in embodiments be omitted, and instead, gap 6 evacuation may be provided through an opening between the glass sheets 3, 4 at the glass sheet edges (not illustrated).

Fig. 1c illustrates a cross sectional view of a VIG unit 1 according to embodiments of the present disclosure. The gap 5 has been evacuated to a reduced pressure by the pump 11, see fig. 1b. In embodiments of the present disclosure, the pressure in the gap 6 may be below 0.05 mbar, such as below 0.005 mbar, such as 0.003 or 0.001 mbar or below after the evacuation of the gap and sealing of the gap 6.

The support structures 2 maintains a distance between the glass sheet surfaces 3a, 4a across the evacuated gap 6 by means of their height when the gap has been evacuated. The distance between the glass sheet surfaces 3a, 4a after gap 6 evacuation may in embodiments of the present disclosure be 0.5 mm or below, such as 0.3 mm or below, for example 0.2mm or below.

One square meter VIG unit may often contain more than 500 such as more than 500 or more than 3000, such as between 500-3000 discretely distributed support structures. In embodiments of the present disclosure, the number of support structures in the evacuated gap 6 may be below 1500 support structures per **VIG** unit m², such as below 900 support structures per **VIG** unit m², for example below 700 support structures per **VIG** unit m².

**In** embodiments of the present disclosure, the number of support structures 5 in the evacuated gap is between 200 and 1800 support structures per **VIG** unit m², such as between 300 and 1300 support structures per **VIG** unit m², for example between 280 and 800 support structures per **VIG** unit m².

The glass sheets 3, 4 each comprises major surfaces 3b, 4b facing away from the evacuated gap 6.

Fig. 2 illustrates schematically a cross section of a part of a **VIG** unit assembly during evacuation of the gap 6 by an evacuation pump **11** according to embodiments of the present disclosure. The evacuation of the gap 6 may be provided in a surrounding pressure such as atmospheric pressure. This provides a plastic deformation of the solid spherical balls 10 by means of the major surfaces 3a, 4a of the glass sheets. The initial shape of the spherical ball is illustrated by the dash-dotted circle 91.

The evacuation of the gap 6 provides that the initial height H2 of a plurality of the solid spherical balls 10 in the gap is reduced by at least 10%. For example, the initial height H2, which corresponds to the ball diameter, may in embodiments of the present disclosure be reduced by at least 20%, such as at least 40% to a reduced support structure height H1. This flattens and enlarges opposing contact surfaces 5a, 5b of the support structures 5 in contact with the first and second major surfaces 3a, 4a respectively. Initially, the ball had substantially no predefined, pre-shaped contact surfaces. Hence, initially, the part of the ball(s) 10 in contact with the surface(s) 3a, 4a may be small due to the curvature of the ball surface. However, as the gap 6 is gradually evacuated, the balls are thereby plastically deformed by the surfaces 3a, 4a, and the contact surface area 5a, 5b of the support structures 5 gradually increases as the support structure height decreases from the initial height H2 being the ball diameter to the reduced height H1.

The evacuation pump **11** may provide at least a part of the reduction /plastic deformation of the initial height H2 due to the gap evacuation. **In** some embodiments, the pump **11** may provide substantially the entire reduction /plastic deformation of the initial height H2 due to the evacuation of the gap 6.

**In** some embodiments of the present disclosure, the reduced support structure height **H1** of a plurality of the support structures 5 in the gap 6 may be between 15% and 95%, such as between 20% and 85%, such as between 30% and 80% of the initial height H2 of the respective solid spherical balls 10. It is understood that this height H1 may be provided by plastic deformation.

**In** some embodiments of the present disclosure, at least 10%, such as at least 40%, for example at least 70% or at least 90% of the total amount of spherical balls 10 arranged at the first surface 3a may be plastically deformed to the reduced support structure height H1.

For example in some embodiments, at least 40%, for example at least 70% or at least 90% of the total amount of spherical balls 10 arranged at the first surface 3a are plastically deformed to said reduced support structure height H1, where said reduced support structure height **H1** is between 20% and 85%, such as between 30% and 80% of the initial height H2 of the respective solid spherical balls 10.

**In** embodiments of the present disclosure where the glass sheets 3, 4 are thermally tempered glass sheets, the major glass sheet surfaces 3a, 4a may have a surface variation caused due to the tempering process, such as caused by roller waves, warp and/or the like as e.g. previously described. **In** one or more embodiments of the present disclosure, a plurality of the support structures 5 are hence subjected to varying plastic deformation in response to surface 3a, 4a unevenness of the thermally tempered glass sheets so as to have different reduced heights H1. This may e.g. in embodiments of the present disclosure provide that the plastically deformed support structures 5 in the gap have a difference in reduced height **H1** of at least 0.02 mm, such as at least 0.05 mm, for example at least 0.08 **mm** or even 0.01 mm or more. This provides that the ball height H2 is changed to automatically fit to the individual surface variations of the selected pair of tempered glass sheets 3, 4. **In** one or more embodiments the thermally tempered glass sheets have an out of flatness deflection of at least 0.1mm or more.

When the glass sheets 3, 4 compress the ball 10, the side surface 5c extending between the glass sheet surfaces 3a, 4a changes shape. This is also illustrated in fig. 2 according to embodiments of the present disclosure, where a cross sectional view of the initial ball 10 and the final support structure shape is illustrated schematically. Before deformation of the ball 10, it was spherical, and the side surfaces 5c, 5d at opposing sides of the cross section described a circular arcs that substantially had a coinciding centre (despite, possibly, a minor deformation of the ball 10 due to the weight of the glass sheet 4) and each had substantially the same radius r3.

After the gap evacuation a plurality of the balls are plastically deformed into support structures comprising a first convex side surface 5c and a second opposite, convex side surface 5d when seen in a cross section (as in e.g. fig. 2) of the plastically deformed support structure 5. These convex side surfaces 5a, 5b extends between the major glass sheet surfaces 3a, 4a. The convex side surfaces 5c, 5d now each describes a minor, curved, such as circular 92, arc having non-coinciding centres C1, C2 as a result of the plastic deformation.

It may be so that at least 80%, such as at least 90%, for example at least 95% of the length of each minor circular arc 5c, 5d is substantially coinciding with the circle CI1, CI2 periphery of the respective circle.

In some embodiments of the present disclosure, the non-coinciding centres C1, C2 may have a mutual distance DIS2 of at least 3% of the initial diameter of the spherical ball, such as a mutual distance of at least 10% of the initial diameter of the spherical ball, such as a mutual distance of at least 20% or at last 35% of the initial diameter of the spherical ball.

In one or more embodiments of the present disclosure, the weight and/or volume of the respective support structure 5 placed at the first glass sheet substantially corresponds to the weight and/or volume of the initial ball 10 used for the support structure 5 before the deformation.

In some embodiments of the present disclosure, the radius r1, r2 of each of the circles 92 comprising each their convex side surface 5c, 5d is at least 10%, such as at least 20%, such as at least 30%, smaller than the radius r3 of the initial solid spherical ball (10) before the deformation. This may occur to at least 40%, such as at last 70% or at least 90% of all support structures in the evacuated gap 6 of the VIG unit.

In one or more embodiments of the present disclosure, the radius r1, r2 of each of said circles CI1, CI2 comprising each their convex side surface may be between 10% and 70%, such as between 20% and 70%, such as between 30% and 60%, smaller than the radius (r3) of the initial solid spherical ball before the ball deformation provided by means of evacuating the gap 6.

In fig. 2, the envisaged circles CI1, CI2 substantially comprising each their convex side surface 5c, 5d may each have a diameter that is larger than the reduced support structure height H1.

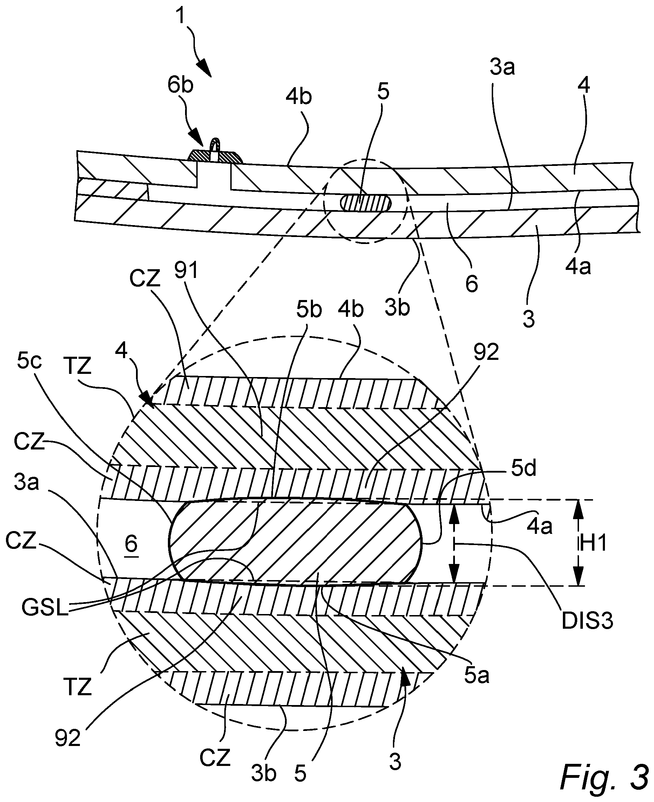

Fig. 3 illustrates schematically a cross sectional view of an embodiment of the present invention, where it is indicated that the contact surfaces 5a, 5b of the support structure 5 that have been provided and shaped by the glass sheets 3, 4, extends partly into the respective glass sheet surface 3a, 4a. The initial glass sheet surface before gap 6 evacuation is illustrated by the dashed lines GSL.

The glass sheets 3, 4 are tempered, such as thermally tempered. Thermally tempered glass sheets comprises exterior compressive zones CZ and an interior tensile stress zone TZ. In fig. 3, the contact surfaces 5a, 5b of the support structure 5 has been forced into the compressive stress zone CZ of the glass sheet 3, 4, causing a recess in the respective major surface 4a, 3a into the compressive stress zone CZ proximate the gap 6. This the inventor has found that this may be acceptable for a VIG unit 1 with a gap 6 pressure of below 0.005 mbar or below 0.002 mbar, for example substantially 0.001 mbar without compromising the vacuum integrity of the VIG unit. As can be seen, the maximum height H1 of the support structure 5 may in some embodiments be slightly larger than the actual gap distance DIS3 proximate the side surface 5c, 5d of the support structure 5 due to that at least a part of the contact surface 5a, 5b extends into the glass sheet surface as a result of the evacuation of the gap 6.

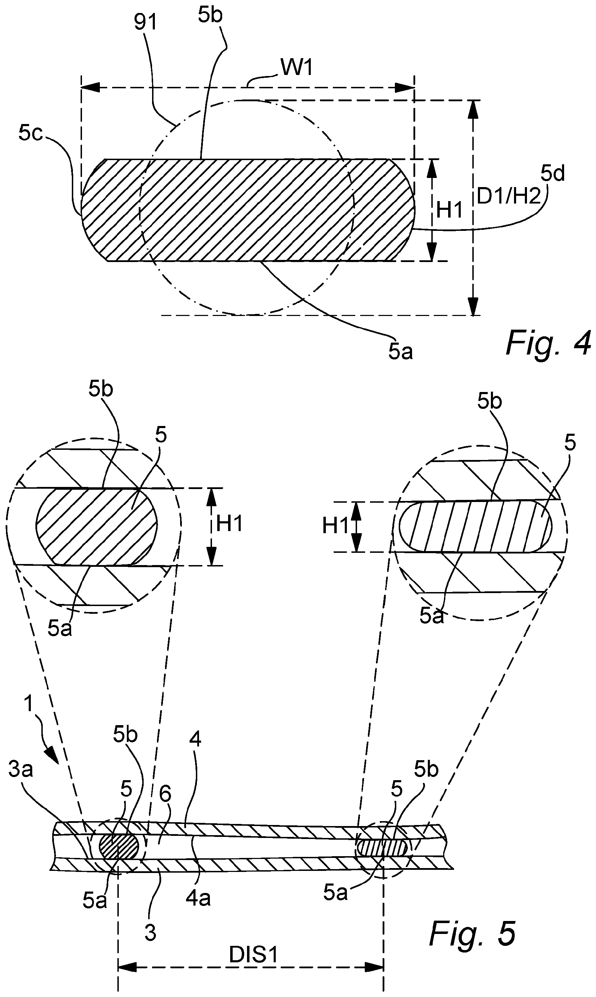

Fig. 4 illustrates schematically a cross sectional view of a support structure 5, according to embodiments of the present disclosure, where the support structure 5 has a maximum width W1. The contour of the initial ball 10 that was used for the support structure is also illustrated by the dash-dotted circle 91. The glass sheets of the VIG unit, the evacuated gap and the like are not illustrated in fig. 4 in order to improve figure understanding.

As can be seen, the maximum support structure width W1 increases when compared to the initial width, i.e. the ball diameter corresponding to the height H2, when the ball is plastically deformed in the gap 6.

In embodiments of the present disclosure, the maximum width W1 of each of a plurality of the support structures 5 in the gap 6 after the plastic deformation is at least 10% larger, for example 20 % larger, for example at least 40% larger, than the initial ball diameter H2 of the respective, solid spherical ball 10 before the plastic deformation.

In some embodiments of the present disclosure, the maximum width W1 of each of a plurality of the support structures 5 in the gap 6 after the plastic deformation may be at least 20% larger, such as at least 40% larger, for example at least 60% larger than the initial diameter H2 of the solid spherical balls 10 before the plastic deformation.

In certain embodiments of the present disclosure, the maximum width W1 of each of a plurality of the support structures 5 in the gap 6 after the plastic deformation may be between 3% and 120%, such as between 5% and 85%, for example between 20% and 65% larger than the initial height H2 of the solid spherical balls 10 before the plastic deformation.

Fig. 5 illustrates schematically an embodiment of the present disclosure wherein the support structures 5 in the evacuated gap 6 of a VIG unit 1 have different heights due to different magnitudes of plastic support structure deformation provided during the gap 6 evacuation. The support structures are placed with the mutual distance DIS1.

Due to the difference in surface variations/surface topology at the glass sheet surfaces, the magnitude of the plastic deformation of the spherical balls 10 may vary. In some embodiments of the present disclosure, the plastically deformed support structures 56 of a VIG unit 1 may have difference in reduced height H1 of at least 0.02 mm, such as at least 0.05 mm, for example at least 0.08 mm. This may occur to a plurality of the support structures at the VIG unit. This may be caused by one or more of glass sheet bowing, glass sheet warp, glass sheet edge lift, roller waves and/or the like. Thermally tempered glass sheets may suffer for one or more of such surface unevenness. In fig. 5, the plastic deformation subjected to the spherical ball used for providing the support structure 5 to the right is larger than the plastic deformation subjected to the spherical ball used for providing the support structure 5 to the left. This is due to the surface unevenness of the glass sheets 3a, 3b.

This provides that the reduced support structure heights **H1** are individually adapted, e.g. in order to adapt to the surface characteristic/topology of the major surfaces of the glass sheets,

As an example, if one ball 10 that had an initial diameter of 0.4 mm is reduced to 0.23 mm in support structure height **H1** whereas another ball of the same diameter is reduced to a support structure height **H1** 0.18 mm, the resulting difference in reduced height **H1** 0.05 mm.

**In** fig. 5, the varying support structure deformation is indicated as occurring to adjacent support structures in the gap 6, but it is understood that the difference in reduced support structure height **H1** within the above mentioned ranges may not necessarily be occurring to neighbouring/adjacent support structures. For example, in some embodiments, the difference in reduced height **H1** within the above mentioned range may occur between the support structure a of the final **VIG** unit that has been subjected to the largest plastic deformation due to the gap evacuation, and the support structure of the final **VIG** unit that has been subjected to the smallest plastic deformation due to the gap 6 evacuation.

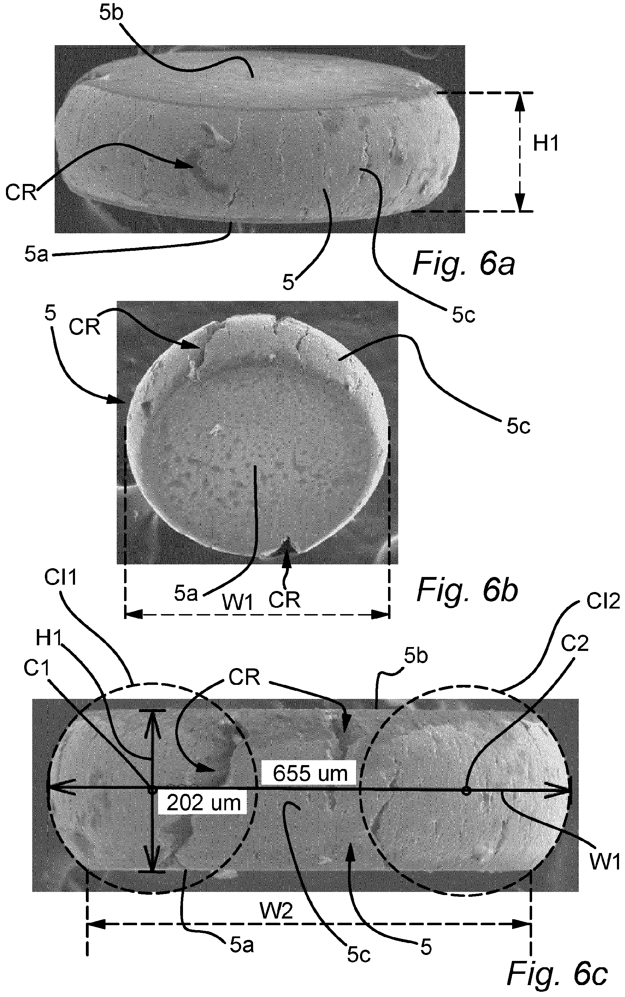

Figs. 6a-6c illustrates microscopic images of a support structure 5 according to various embodiments of the present disclosure where a spherical, solid steel ball has been deformed into a support structure having a height H1. The initial steel ball was here a precision steel ball having a diameter of 0.4 mm, but other ball diameters may be used in other embodiments of the present disclosure, as e.g. described previously in this document. The compression/deformation of the steel ball was provided by means of coining the solid steel ball, to provide the contact surfaces 5a, 5b. The microscope used for the image may be a stereo microscope or a dyno light microscope.

The solid spherical balls 10 may be metal precision balls such as steel precision balls. Such precision balls may have good/tight tolerances, for example defined by **ISO** 3290 relating to features of finished steel balls for roller bearings, and defining different grades of ball bearings. **In** embodiments of the present disclosure, tolerances such as ball diameter variations lower than 1 um, (According to some manufacturers corresponding to "Grade G40") such as lower than 0.4 um, (According to some manufacturers corresponding to "Grade G16") may be used as the support structure workpieces. In other embodiments of the present disclosure, balls with larger overall diameter variations/lower tolerance than mentioned above may be used.

The inventor found that some cracks CR may occur in the side surface 5c of the support structure 5 when the ball was deformed, but such cracks was generally not found to reduce the desired structural performance of the support structure/spacer 5. The side surface 9c extends between the opposing contact surfaces 5a, 5b, and extends in the present example convexly, such as bulging, between the surfaces 5a, 5b.

The side surface 5c is bulging, and in a cross sectional view (see e.g. fig. 4), the side surface 5c describes an arc, such as substantially a circular arc, between the surfaces 5a, 5b at both sides of a support structure cross section. See fig. 6c where the cross section can be imagined as the silhouette of the support structure 5 seen from the side towards the side surface 9c. The side surface 9c arc described by the surface 5c between the contact surfaces 5a, 5b may substantially be an arc of/comprised in a circle CI1, CI2, and these circles have non-coinciding centres C1, C2, see also fig. 4. A similar situation may be caused by the plastic deformation during gap evacuation by as pump.

The side surface 5c arc extending between the contact surfaces 5a, 5b may have a length that is larger than the height H1 (or H2), such as at least 1.1 or at least 1.3 times the height H1.

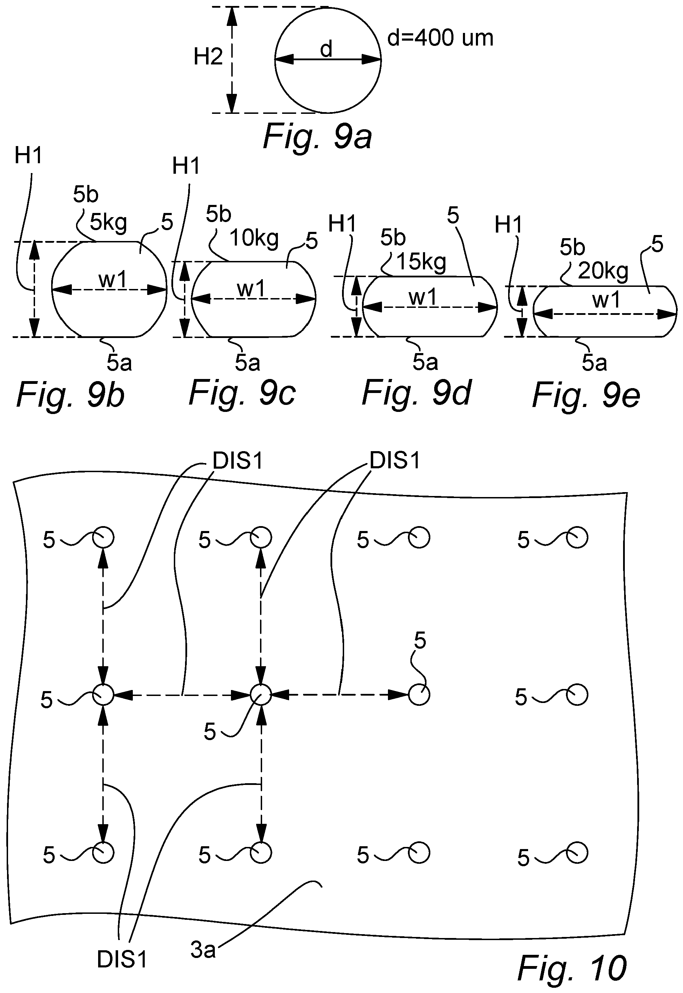

As can be seen from fig. 9c, the support structure 5 has a width W1. As the support structure 5 in embodiments of the present disclosure as illustrated in figs. 6a-6c may have an outer circular side periphery described by the side surface/side edge surface 9c extending between the contact surfaces 5a, 5b, the width W1 may be a maximum diameter.

In embodiments of the present disclosure, the maximum width W1, such as the maximum diameter, of the support structure 5 may be larger than the height H1 provided after the deformation of the spacer/support structure 5, such as at least 1.3, times, such as at least 1.5 times or at least 1.8 times larger than the height H1 of the support structure 5.

In embodiments of the present disclosure, the maximum width W1, such as the maximum diameter, of the support structure 5 may be between 1.3 and 6 times, such as between 1.5 and 6 times, for example between 2 times and 4 times larger than the height H1 of the spacer/support structure 5.

In embodiments of the present disclosure, the maximum width W1, such as the maximum diameter, of the support structure 5 may be at least 2 times, such as at least 2.4 times or at least 2.8 times larger than the height H1 of the support structure 5. This may be provided for a plurality of the support structures in the evacuated gap, naturally accounting for potentially present glass sheet surface variations.

In fig. 6c, the maximum width W1, such as the maximum diameter, of the support structure 5 is about W1/H1 = 0.655 mm /0.202 mm = 3.2 times larger than the height H1 of the support structure 5.

The increased maximum width W1 when compared to the support structure height H1 obtained by means of the deformation of the spherical ball is provided due to the deformation of the ball during VIG gap evacuation so that the plastic deformation of the ball due to the deformation provides a "flow" of the ball material that result in a support structure width W1 that is larger than the initial ball width/diameter.

In fig. 9c, the width W2 (such as diameter) of the contact surfaces 5a, 5b is less than the maximum width W1 (such as diameter) of the support structure , as the maximum width W1 is determined between the bulging side surfaces.

In some embodiments, the width W2 (such as diameter) of the contact surfaces 5a, 5b may be between 0.6 and 0.96 times the maximum width W1 (such as diameter) of the support structure, such as between 0.7 and 0.9 times the maximum width W1 (such as diameter) of the support structure.

For example, the width (such as diameter) W2 of the contact surfaces 5a, 5b may be less than 0.95 times, such as less than 0.8 times, for example less than 0.6 times the maximum width W1 (such as diameter) of the support structure 5.

In some embodiments, the width W2 (such as diameter) of the contact surfaces 5a, 5b may be larger than 0.4 times, such as larger than 0.5 times , for example larger than 0.6 times the maximum width W1 (such as diameter) of the support structure 5.

In some embodiments of the present disclosure, as can be seen from e.g. fig. 6b and other of the figures described above and/or below, the contact surface 5a, 5b area after ball deformation may make up 50% or more of the support structure 5 silhouette when seen perpendicular to the respective contact surface 5a, 5b.

It is generally understood that in embodiments of the present disclosure, the support structures 5 may have a support structure height H1 after the deformation by the deformation unit of less than 0.6 mm, such as less than 0.5 mm such as less than 0.3 mm, such as less than 0.25 mm. For example, the support structure/spacer height H1 may be 0.2 mm or less.

The compressive load on each of at least 50%, such as at least 70% of the support structures 5 in an evacuated VIG unit (see fig. 2c) gap, for a cylindrical support structure or a support structure 5 with curved outer side edge surface 5c and plane contact surface 5a, 5b as illustrated in several of the figures described above, in a "square support structure grid" of 40x40 mm2 (i.e. distance of substantially 40mm between neighbouring/adjacent support structures 5), may amount to at least 0.5 GPa, such as at least 0.8 GPa, such as substantially 1 GPa. In some embodiments, the compressive load on at least 80% or 90%, such as substantially all support structures of the VIG unit may be between 0.5 GPa and 2 GPa, such as between 0.6 and 1.3 GPa.

Outgassing from the support structure 5 should be minimized. Particularly outgassing of non-getterable species should be avoided for example argon.

In one or more embodiments of the present disclosure, the maximum width W1 of the support structure 5 after the deformation of the balls in the evacuated gap is larger, such as at least 3% larger, for example 20 % larger, such as at least 35% larger or at least 100% larger than the initial width D1 of the ball before the ball deformation. This may be the case for a plurality of the support structures in the VIG unit, for example for at least 50%, such as at least 80%, such as at least 95% of the support structures in the evacuated gap.

In one or more embodiments of the present disclosure, the maximum width W1 of the support structure 5 after the ball deformation due to the gap evacuation is at least 40% larger, for example at least 50% larger, such as at least 80% larger than the initial width D1 of the ball before the ball deformation.

In one or more embodiments of the present disclosure, the maximum width W1 of the support structure 5 after the ball deformation due to the VIG gap evacuation is between 10% and 85% larger, for example between 20% and 70% larger than the initial width D1 of the ball before the ball deformation.

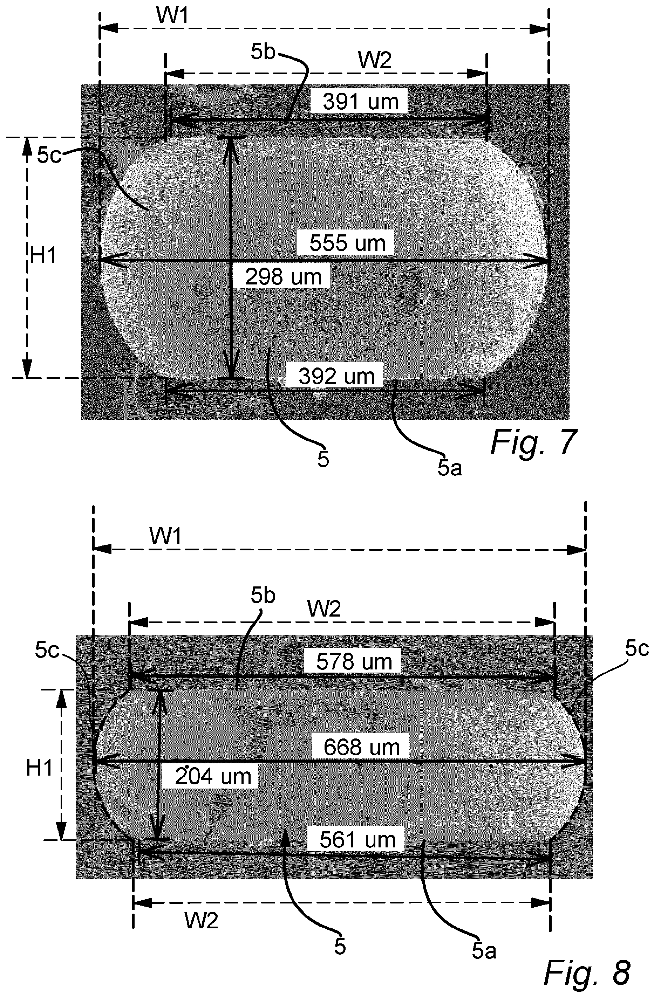

Fig. 7 illustrates an image of a support structure 5 according to embodiments of the present disclosure, where the support structure 5 was made from a spherical, solid metal ball of a diameter of 0.4 mm. After deformation by means of a deformation unit such as a press or stamp, the support structures has a height of 298 microns, i.e. approximately 0.3 mm. the maximum support structure width W1 is here 555 microns, corresponding to about 0.6 mm.

The contact surface area 5a, 5b width W2, such as the diameter of the contact surfaces is about 391 and 392 microns respectively, corresponding to about 0.4 mm.

Fig. 8 illustrates an image of a support structure 5 according to embodiments of the present disclosure, where the support structure 5 is made from a spherical, solid metal ball of a diameter of 0.4 mm. After deformation by means of a deformation unit, the support structure 5 has a height of 204 microns, i.e. approximately 0.2 mm. the maximum width W1 is here 668 microns, corresponding to about 0.7 mm. The contact surface width W2, such as the diameter of the contact surfaces 5a, 5b is about 578 and 561 microns respectively, corresponding to 0.6 mm. The deformations illustrated in figs. 6a-8 indicates the behaviour of a solid steel ball when the steel ball is deformed during VIG unit evacuation. A part of the surface of the steel balls initially abutting the glass sheet surfaces 3a, 4a being forced into the glass sheets 3, 4, such as into a compressive zone, the resulting contact surfaces 5a, 5b after plastic deformation of the steel ball during VIG evacuation may be less plane than indicated in the images.

Fig. 9a illustrates an initial special, massive steel ball for use as a VIG unit support structure workpiece 10 according to embodiments of the present disclosure. The spherical ball 10 has a diameter D1 of for example 0.4 mm.

Figs. 9b-9e illustrates the silhouette/contour of the ball of the type of fig. 9a, and are the contour silhouette/contour of the ball which are drawn up based on microscopic images of spherical, solid steel balls that have been plastically deformed by different loads. As can be seen, as the deformation load/force provided by e.g. the deformation unit 20 increases from 5 kg to 20 kg, the contact surface 5a, 5b area increases, the support structure height H1 decreases, and also the maximum support structure width W1 increases.

Fig. 10 illustrates a square support structure grid arranged at a major surface 3a according to embodiments of the present disclosure. The support structures 5 are arranged with a mutual distance DIS1. The distance DIS1 may as previously described be at least 30 mm, for example it may be between 30 mm and 60 mm. For example, the distance DIS1 may be between 30 mm and 60 mm, such as between 35 mm and 45 mm, for example between 38 mm and 42 mm.

In one or more embodiments of the present disclosure, the mutual distance DIS1 between at last 80%, of adjacent support structures, such as at least 90% of adjacenet support structures of the final VIG unit, may be at least 30 mm such as between 30 mm and 60 mm such as between 35 mm and 45 mm, for example between 38 mm and 42 mm.

In some embodiments, the mutual distance DIS1 between substantially all adjacent support structures of the final VIG unit may be at least 30 mm such as between 30 mm and 60 mm such as between 35 mm and 45 mm, for example between 38 mm and 42 mm.

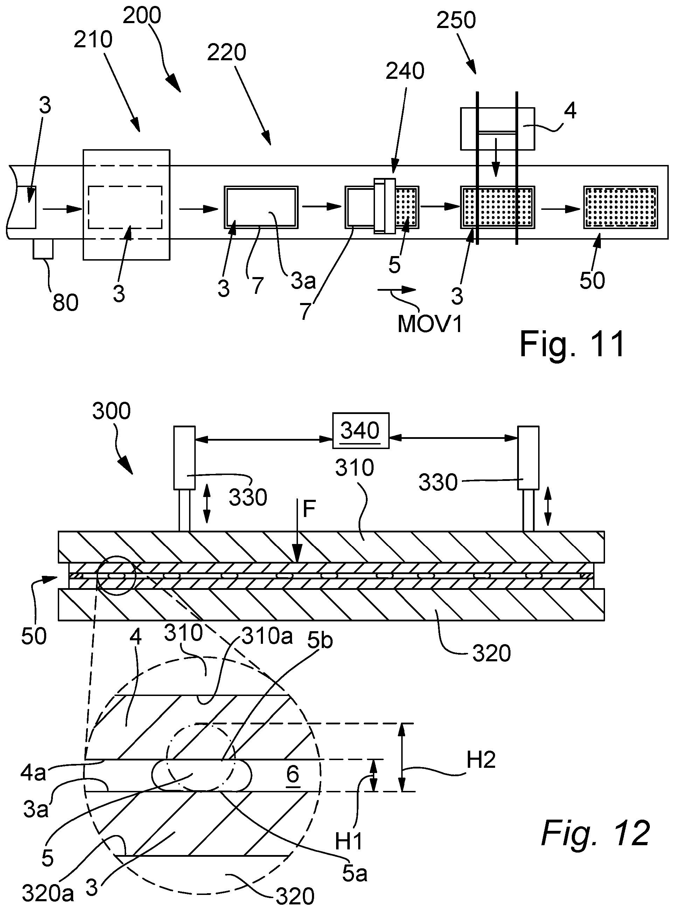

Fig. 11 illustrates schematically a manufacturing line 200 for a VIG unit according to various embodiments of the present disclosure. The first glass sheet 3 first enters a first station 200 where edge seal material 7 such as solder glass edge seal material or metal solder edge seal material is provided to the upwardly facing major glass sheet surface 3a.

Then the glass sheet 3a is moved to a support structure placement station 240 where one or more support structure dispensers, such as a dispenser system array 100 as previously described, dispenses solid spherical balls onto the major surface 3a. This is provided so that the support structures 5 are placed at the surface 3a with a mutual, desired distance DIS1 (see fig. 10) in e.g. rows and/or columns on the glass sheet surface 3a, or in another desired pattern. A relative movement MOV1 may be provided by means of a motor to provide a relative movement between the one or more support structure dispensers and the glass sheet in a direction along the glass sheet surface 3a. The movement MOV1 and the direction DIR1 (see fig. 1a) may be perpendicular to each other.

At glass pairing station 250, the glass sheets 4 and 3 are paired by placing the second glass sheet 4 on top of the first glass sheet 3 to cover the support structures 5. The glass sheet 4 may e.g. rest on the edge seal material 7. The glass pairing station 250 may comprise automation systems such as one or more of a robotic arm, one or more linear displacement members, one or more rails and/or the like for transporting the glass sheet 4 to the position opposite the surface 3a and lowering the glass sheet towards the surface 3a.

After this, the edge seal material 7 of the VIG unit assembly 150 may be heated and the gap is evacuated to a reduced pressure as e.g. previously described (not illustrated in fig. 11) in order to deform the spherical balls placed at the station 240. It is understood that the edge seal material 7, if even needed, may be placed/applied subsequent to placing the support structures at station 240 instead. It may even in some embodiments be omitted if the glass sheets 3, 4 are fused directly together by a glass sheet 3, 4 edge melting operation.

The solid spherical balls at the major glass sheet surface 3a may be maintained in position at the first major surface 3a by means of a temporary support structure maintaining arrangement 80 (not illustrated in fig. 11) as previously described. In some embodiments, the support structure placement station 240 and the glass pairing station 250 may be placed at the same physical location so that moving of the glass sheet 3a with the balls thereon is reduced. In other embodiments, the support structure placement station 240 and the glass pairing station 250 may be placed at different locations at the manufacturing line as illustrated. In some embodiments, the support structure maintaining arrangement 80 may be movable together with the glass sheet in order to maintain the ball position(s) at the surface 3a.

Fig. 12 illustrates a support structure 5 deformation according to embodiments of the present disclosure. In fig. 2, the support structure deformation to obtain the support structure height H1 is provided by means of the evacuation pump which evacuates the gap. In the embodiment of fig. 12, an external mechanical pressing arrangement 300 comprising pressing bodies 310, 320 such as pressing plates, and actuators 330 instead provides the second support structure deformation to obtain the support structure height H1. The bodies 310, 320 may e.g. comprise metal bodies or bodies of another material.

Two actuators 330 are illustrated in fig. 12, but it is understood that in further embodiments, only one actuator 330, or more than two actuators 330, may be provided in further embodiments. The pressing bodies 310, 320 comprises pressing surfaces 310a, 320a, and one or both pressing bodies is/are configured to move towards and away from the other body so as to increase or reduce the distance between the pressing surfaces 310a, 320a. This movement is provided by means of the one or more actuators 330.

**A VIG** unit assembly 50 comprising the glass sheets 3, 4 (that may e.g. be annealed glass sheets or thermally tempered glass sheets) and the support structures 5 distributed between the glass sheets is placed between the pressing plate 310, 320 surface 310a, 320a. The support structures 5 of the **VIG** unit assembly 50 when the assembly is placed in the gap, has the initial support structure height H1.

One or more actuators 330 are controlled by a hardware controller 340 so that the distance between pressing surfaces 310a, 320a of the pressing bodies 310, 320 is reduced. This provides a compression force F towards the major exterior surfaces of the glass sheets of the **VIG** unit assembly 50 that faces away from the gap 6. This compression force F provides that the major glass sheet surfaces 3a, 4a facing the gap 6 provides a plastic deformation of the support structures 5 in the gap 6 so that the height H2 of the support structures (in this case spherical balls) is reduced to a second, reduced height H1. This provides an individual adaption of the spacer/support structure height to the surface 3a, 4a topography of the glass sheets 3a, 4a.

The hardware controller 340 may e.g. comprise one or more computer processors, one or more relays and/or electronic circuitry designed to control the one or more actuators. The hardware controller 340 may be designed so as to operate according to software code stored in a data storage and/or according to one or more sensor inputs for use in determining when to start/and/or stop compressing the support structures and/or for determining the applied force F. **In** some embodiments, the applied force F may be controlled based on a force threshold and sensor input. The sensor input may comprise e.g. input from a force sensor, a current input from the actuator(s) 330 and/or the like.

The magnitude of the plastic deformation from the height H2 into the height H1 may in embodiments of the present disclosure be as described in relation to one or more embodiments described above, e.g. in relation to fig. 7 and/or 7a.

In fig. 12, the actuator(s) 330 is/are controlled so that the top press plate 210 moves towards the lower plate 320. In other embodiments of the present disclosure, the actuator(s) 330 may be directly or indirectly connected to the lower pressing plate 320 instead, and the lower plate 320 may hence be moved, together with the VIG unit assembly 50 supporting thereon, towards the upper pressing plate 310. In further embodiments of the present disclosure, one or more actuators 330 may be provided and configured to move one or both bodies 310, 320, and both pressing bodies 310, 320 may be movable towards and/or away from each other.

In some embodiments of the present disclosure, the external mechanical pressing arrangement 300 may provide some of the plastic deformation to obtain the height H1, or most, such as substantially all of the deformation to obtain the height H1. In some embodiments, the deformation, such as plastic deformation, may be provided partly by means of an evacuation pump evacuating the gap (e.g. as described above in relation to the description of fig. 2) and partly by the external mechanical pressing arrangement 300.

The actuator(s) 330 may in embodiments of the present disclosure be or comprise a pneumatic actuator, a hydraulic actuator, an electric actuator, e.g. comprising an electric motor and/or the like. It may or may not comprise a gearing.

As illustrated in fig. 12, the pressing bodies 310, 320 may be arranged opposite to the gap to be evacuated.

In some embodiments of the present disclosure, the pressing bodies 310, 320 may cover at least 60%, such as at least 90% of the exterior major surfaces of the glass sheets 3, 4.

In some embodiments of the present disclosure, the pressing bodies 310, 320 may cover substantially all of the exterior major surfaces of the glass sheets 3, 4.

**In** fig. 12, it is illustrated that the support structure to be deformed by the surfaced 3a, 4a is a spherical ball. It is understood that in other embodiments, the support structure may have a different shape than spherical, e.g. as described further below.

**In** figs. 12, a hardware controller 340 controls the actuator(s) 330, e.g. based on a software program code stored in a data storage (not illustrated).

**In** one or more embodiments of the present disclosure, one or more load sensors (not illustrated) may be configured to directly or indirectly detect the amount of force F provided to the assembly 50. For example, in some embodiments, the one or more load sensors may comprise a processing unit receiving/retrieving electric current consumption information obtained from the actuator(s), it may comprise one or more strain gauges and/or the like. **In** some embodiments, such load sensor(s) may provide feedback to a closed control loop system of a controller 340 controlling the actuator(s) 330. The compression force F, such as a maximum compression force, applied by means of the actuator(s) 330 may in embodiments of the present disclosure be a predetermined compression force. The predetermined compression force may be based on one or more parameters stored in a data storage such as the above mentioned data storage. The one or more parameters may e.g. be related to the distance between adjacent spacers/support structures 5 in the gap, the support structure material, support structure size and/or the like.

**In** some embodiments, the hardware controller may control the actuator(s) to gradually increase the force F to the predetermined compression force such as a predetermined maximum compression force. This may e.g. be provided by ramping up the force applied from an initial lower force.

**In** one or more embodiments of the present disclosure, a resilient sheet (not illustrated) may be placed between the respective pressing surface 310a, 320a and the respective major exterior glass sheet 3, 4, surface facing away from the gap 6. This my e.g. help to distribute forces and/or protect glass sheet surfaces.

The embodiments described above in relation to one or more of the figures 1-12 are generally illustrated and described in relation to using solid, spherical balls such as metal balls as the support structures to be deformed in the gap 6 by means of, the major surfaces 3a, 4a of the glass sheets. **In** other embodiments of the present disclosure, the provided solid support structures may have another shape than spherical. Here, the plastic deformation of the provided solid support structures by means of said major surfaces 3a, 4a may hence be provided to solid, such as monolithic, support structures of another shape than spherical balls. For example, in some embodiments, such solid support structures of another shape than spherical balls may comprise or consist of solid metal support structures. **In** some embodiments, the solid support structures of another shape than spherical balls may have a rectangular shape, a conical shape, e.g. the shape of a frustum of a cone or frustum of a pyramid, the shape of a cylinder and/or the like. **In** some embodiments, the solid support structures of another shape than spherical balls may be support structures cut from a wire, e.g. at the manufacturing line for manufacturing **VIG** unit assemblies.

The material of the solid support structures, such as solid balls, such as solid metal balls, may extend substantially continuously between the glass sheet surfaces 3a, 4a. See e.g. figs 4. And 5. Hence, no predefined/predetermined gap/cavity may be present in the support structure material prior to providing the deformation of the support structure by the major surfaces. The material of the support structures may hence provide a continuum of the support structure material between the major surfaces 3a, 4a.

It is generally to be understood that the **VIG** unit may e.g. be transparent to at least visible light.

**In** embodiments of the present disclosure, the manufactured **VIG** unit may be for use in a building window. **In** some embodiments, the building window may be a roof window. **In** other embodiments, the building window may be a vertical window such as a façade window. **In** some embodiments, the **VIG** unit when used in a building window may be laminated at one or both sides of the **VIG** unit by means of an interlayer and a further glass sheet. **In** other embodiments of the present disclosure, the **VIG** unit may be used for e.g. cooling furniture such as in a door of a refrigerator or freezer and/or for heating furniture such as in a door of an oven. The **VIG** unit to enable a view through the **VIG** unit towards the goods stored in the interior of the cooling or heating furniture.

In general, it is to be understood that the present disclosure is not limited to the particular examples described above but may be adapted in a multitude of varieties within the scope of the invention as specified in the appended claims.

Accordingly, for example, one or more of the described and/or illustrated embodiments above may be combined to provide further embodiments of the disclosure.

## Claims

1. Method of producing a vacuum insulated glass (VIG) unit (1), wherein said method comprises:
- distributing a plurality of support structures (5) at a first tempered glass sheet (3) so that the support structures supports on a first major surface (3a) of the first tempered glass sheet (3), and so that the minimum distance (DIS1) between adjacent support structures is at least 30 mm,
- arranging a second tempered glass sheet (4) so that the distributed support structures (5) are placed in a gap (6) between the first major surface (3a) and a second major surface (4a) of the second tempered glass sheet (4),
- providing an edge seal around the periphery of the glass sheets (3, 4),
- evacuating said gap (6),
- sealing the evacuated gap (6),
wherein the provided support structures (5) arranged at the first major surface (3a) comprises solid, spherical balls (10),
wherein a plastic deformation of the solid spherical balls (10) is provided by means of said major surfaces (3a, 4a) so that the initial height (H2) of a plurality of the solid spherical balls (10) is reduced by at least 10%, such as at least 20%, such as at least 40% to a reduced support structure height (H1), thereby flattening and enlarging opposing contact surfaces (5a, 5b) of the support structures (5) in contact with the first and second major surfaces (3a, 4a) respectively,
**characterized in that**
the contact surfaces (5a, 5b) of the support structures (5) are provided and shaped by the glass sheets (3, 4) so as to extend partly into the respective glass sheet surface (3a, 4a).

2. Method according to claim 1, wherein the solid spherical balls (10) comprises or consist of metal such as steel, such as a monolithic steel structure.

3. Method according to any of the preceding claims, wherein the material of the solid, spherical balls (10) has a Youngs modulus between 170 Gpa and 280 GPA, such as between 180 GPa and 230 GPa at 20°C.

4. Method according to any of the preceding claims, wherein the mutual distance (DIS1) between adjacent support structures (5) at the glass sheet surface (3a) is between 30 mm and 60 mm such as between 35 mm and 45 mm, for example between 38 mm and 42 mm.

5. Method according to any of the preceding claims, wherein a plurality of said plastically deformed support structures (5) comprises a first convex side surface (5c) and a second opposite, convex side surface (5d) when seen in a cross section of the plastically deformed support structure (5), where said convex side surfaces (5c, 5d) extends between the major glass sheet surfaces (3a, 4a), and wherein the convex side surfaces (5c, 5d) each may describe minor, circular (92) arcs having non-coinciding centres (C1, C2).

6. Method according to any of the preceding claims, wherein the maximum width (W1) of each of a plurality of the support structures (5) in the gap (6) after the plastic deformation is larger, such as at least 10% larger, for example 20 % larger, for example at least 40% larger, than the initial diameter (H2) of the solid spherical balls (10) before the plastic deformation.

7. Method according to any of the preceding claims, wherein the tempered glass sheets (3, 4) are thermally tempered glass sheets, and wherein a plurality of the support structures (5) may be subjected to varying plastic deformation in response to surface (3a, 4a) unevenness of the thermally tempered glass sheets (3, 4) so as to have different reduced heights (H1).

8. Method according to any of the preceding claims, wherein the solid spherical balls (10) are maintained in position at the first major surface (3a) by means of a support structure maintaining arrangement (80), such as a temporary support structure maintaining arrangement (80), wherein the support structure maintaining arrangement (80) is arranged external to the gap (6) and/or wherein the temporary support structure maintaining arrangement comprises a magnetic maintaining arrangement, and/or a template.

9. Method according to any of the preceding claims, wherein at least a part of the plastic deformation of the solid spherical balls (10) by means of said major surfaces (3a, 4a) is provided by evacuating the gap (6) in a surrounding pressure such as atmospheric pressure, and/or wherein at least a part of the plastic deformation of the solid spherical balls (10) by means of said major surfaces (3a, 4a) is provided by means of an external mechanical pressing arrangement (300) configured to provide a compression force (F) to exterior major surfaces of a VIG unit assembly (50) comprising said glass sheets (3,4), wherein the external mechanical pressing arrangement (300) may comprise pressing bodies (310, 320), one or more actuators (330) and a hardware controller (340) configured to control the one or more actuators (330).

10. Method according to any of the preceding claims, wherein the maximum width (W1) of each of a plurality of the support structures (5) in the gap (6) after the plastic deformation is between 3% and 120%, such as between 5% and 85%, for example between 20% and 65% larger than the diameter (H2) of the solid spherical balls (10) before the plastic deformation.

11. Method according to any of the preceding claims, wherein one or both of the tempered glass sheets (3, 4) have a thickness between 2 mm and 6 mm, such as between 2 mm and 4 mm, for example between 2.5 mm and 3.5 mm including both end points.

12. Method according to any of the preceding claims, wherein the solid spherical balls (10) at the major glass sheet surface (3a) have a diameter (H2) between 0.1 mm and 0.8 mm, such as between 0.2 mm and 0.6 mm, such as between 0.25 mm and 0.45 mm.

13. Method according to any of the preceding claims, wherein the evacuation of the gap (6) is provided by means of a pump (11) to a gap (6) pressure below 0.005 mbar, such as below 0.003 mbar, such as to below 0.002 mbar.

14. Method according to any of the preceding claims, wherein the maximum width (W1) of the support structure (5) is at least 1.5 times or at least 1.8 times larger, preferably at least 2 times larger, such as at least 2.4 times larger or at least 2.8 times larger than the height (H1) of the support structure (5).

15. Method according to any of the preceding claims, wherein the plastic deformation of the solid spherical balls (10) is provided by means of said major surfaces (3a, 4a) so that the initial height (H2) of a plurality of the solid spherical balls (10) is reduced by at least 40% to the reduced support structure height (H1).

16. A vacuum insulated glass unit (1) produced by means of a method according to any of the preceding claims, wherein the vacuum insulated glass unit (1) comprises a first thermally tempered glass sheet (3) and a second thermally tempered glass sheet (4), and
a plurality of solid, plastically deformed support structures (5) comprising a first contact surface (5a) and a second opposite contact surface (5b), wherein the support structures (5) are distributed in the evacuated, sealed gap (6) between opposing, major surfaces (3a, 4a) of the thermally tempered glass sheets (3, 4),
wherein the mutual distance between adjacent support structures (5) is above 30 mm, wherein the plastically deformed support structures (5) comprises a first convex side surface (5c) and a second opposite, convex side surface (5d) when seen in a cross section of the plastically deformed support structure (5), where said convex side surfaces (5c, 5d) extend between the major glass sheet surfaces (3a, 4a), and wherein the convex side surfaces (5c, 5d) each describes minor circular (92) arcs having non-coinciding centres (C1, C2),
wherein the contact surfaces (5a, 5b) of the support structures (5) are provided and shaped by the glass sheets (3, 4) so as to extend partly into the respective glass sheet major surface (3a, 4a).

## Patentansprüche

1. Verfahren zur Herstellung einer Vakuumisolierglaseinheit (VIG-Einheit) (1), wobei das Verfahren umfasst:
- Verteilen einer Vielzahl von Stützstrukturen (5) auf einer ersten vorgespannten Glasscheibe (3), sodass die Stützstrukturen auf einer ersten Hauptfläche (3a) der ersten vorgespannten Glasscheibe (3) aufliegen, und sodass der Mindestabstand (DIS1) zwischen benachbarten Stützstrukturen mindestens 30 mm beträgt,
- Anordnen einer zweiten vorgespannten Glasscheibe (4), sodass die verteilten Stützstrukturen (5) in einem Spalt (6) zwischen der ersten Hauptfläche (3a) und einer zweiten Hauptfläche (4a) der zweiten vorgespannten Glasscheibe (4) angeordnet sind,
- Bereitstellen einer Randversiegelung um den Umfang der Glasscheiben (3, 4),
- Evakuieren des Spalts (6),
- Versiegeln des evakuierten Spalts (6),
wobei die bereitgestellten, an der ersten Hauptfläche (3a) angeordneten Stützstrukturen (5) massive, kugelförmige Kugeln (10) umfassen,
wobei eine plastische Verformung der massiven kugelförmigen Kugeln (10) mittels der Hauptflächen (3a, 4a) bereitgestellt wird, sodass die Anfangshöhe (H2) einer Vielzahl der massiven kugelförmigen Kugeln (10) um mindestens 10 %, beispielsweise mindestens 20 %, beispielsweise mindestens 40 %, auf eine verringerte Stützstrukturhöhe (H1) reduziert wird, wodurch gegenüberliegende Kontaktflächen (5a, 5b) der Stützstrukturen (5), die mit der ersten bzw. zweiten Hauptfläche (3a, 4a) in Kontakt stehen, abgeflacht und vergrößert werden, **dadurch gekennzeichnet, dass**
die Kontaktflächen (5a, 5b) der Stützstrukturen (5) durch die Glasscheiben (3, 4) bereitgestellt und geformt werden, sodass sie sich teilweise in die jeweilige Glasscheibenfläche (3a, 4a) hinein erstrecken.

2. Verfahren nach Anspruch 1, wobei die massiven kugelförmigen Kugeln (10) Metall, wie etwa Stahl, beispielsweise eine monolithische Stahlstruktur, umfassen oder daraus bestehen.

3. Verfahren nach einem der vorhergehenden Ansprüche, wobei das Material der massiven kugelförmigen Kugeln (10) bei 20 °C einen Elastizitätsmodul zwischen 170 GPa und 280 GPa, beispielsweise zwischen 180 GPa und 230 GPa, aufweist.

4. Verfahren nach einem der vorhergehenden Ansprüche, wobei der gegenseitige Abstand (DIS1) zwischen benachbarten Stützstrukturen (5) an der Glasscheibenfläche (3a) zwischen 30 mm und 60 mm, beispielsweise zwischen 35 mm und 45 mm, zum Beispiel zwischen 38 mm und 42 mm, beträgt.

5. Verfahren nach einem der vorhergehenden Ansprüche, wobei eine Vielzahl der plastisch verformten Stützstrukturen (5) eine erste konvexe Seitenfläche (5c) und eine zweite gegenüberliegende konvexe Seitenfläche (5d), in einem Querschnitt der plastisch verformten Stützstruktur (5) gesehen, umfasst, wobei sich die konvexen Seitenflächen (5c, 5d) zwischen den Hauptflächen (3a, 4a) der Glasscheiben erstrecken, und wobei die konvexen Seitenflächen (5c, 5d) jeweils kleine kreisförmige Bögen (92) mit nicht zusammenfallenden Mittelpunkten (C1, C2) beschreiben können.

6. Verfahren nach einem der vorhergehenden Ansprüche, wobei die maximale Breite (W1) jeder einer Vielzahl der Stützstrukturen (5) in dem Spalt (6) nach der plastischen Verformung größer ist, beispielsweise mindestens 10 % größer, zum Beispiel 20 % größer, zum Beispiel mindestens 40 % größer als der Anfangsdurchmesser (H2) der massiven kugelförmigen Kugeln (10) vor der plastischen Verformung.

7. Verfahren nach einem der vorhergehenden Ansprüche, wobei die vorgespannten Glasscheiben (3, 4) thermisch vorgespannte Glasscheiben sind, und wobei eine Vielzahl der Stützstrukturen (5) als Reaktion auf Unebenheiten der Flächen (3a, 4a) der thermisch vorgespannten Glasscheiben (3, 4) unterschiedlichen plastischen Verformungen ausgesetzt werden kann, sodass sie unterschiedliche verringerte Höhen (H1) aufweisen.

8. Verfahren nach einem der vorhergehenden Ansprüche, wobei die massiven kugelförmigen Kugeln (10) mittels einer Stützstruktur-Halteanordnung (80), beispielsweise einer temporären Stützstruktur-Halteanordnung (80), an der ersten Hauptfläche (3a) in Position gehalten werden, wobei die Stützstruktur-Halteanordnung (80) außerhalb des Spalts (6) angeordnet ist und/oder wobei die temporäre Stützstruktur-Halteanordnung eine magnetische Halteanordnung und/oder eine Schablone umfasst.

9. Verfahren nach einem der vorhergehenden Ansprüche, wobei mindestens ein Teil der plastischen Verformung der massiven kugelförmigen Kugeln (10) mittels der Hauptflächen (3a, 4a) durch Evakuieren des Spalts (6) bei einem Umgebungsdruck, wie etwa Atmosphärendruck, bereitgestellt wird, und/oder wobei mindestens ein Teil der plastischen Verformung der massiven kugelförmigen Kugeln (10) mittels der Hauptflächen (3a, 4a) mittels einer externen mechanischen Pressanordnung (300) bereitgestellt wird, die dazu ausgelegt ist, eine Druckkraft (F) auf äußere Hauptflächen einer die Glasscheiben (3, 4) umfassenden VIG-Einheitenanordnung (50) auszuüben, wobei die externe mechanische Pressanordnung (300) Presskörper (310, 320), einen oder mehrere Aktuatoren (330) und eine Hardwaresteuerung (340), die dazu ausgelegt ist, den einen oder die mehreren Aktuatoren (330) zu steuern, umfassen kann.

10. Verfahren nach einem der vorhergehenden Ansprüche, wobei die maximale Breite (W1) jeder einer Vielzahl der Stützstrukturen (5) in dem Spalt (6) nach der plastischen Verformung zwischen 3 % und 120 %, beispielsweise zwischen 5 % und 85 %, zum Beispiel zwischen 20 % und 65 %, größer ist als der Durchmesser (H2) der massiven kugelförmigen Kugeln (10) vor der plastischen Verformung.

11. Verfahren nach einem der vorhergehenden Ansprüche, wobei eine oder beide der vorgespannten Glasscheiben (3, 4) eine Dicke zwischen 2 mm und 6 mm, beispielsweise zwischen 2 mm und 4 mm, zum Beispiel zwischen 2,5 mm und 3,5 mm einschließlich beider Endpunkte, aufweisen.

12. Verfahren nach einem der vorhergehenden Ansprüche, wobei die massiven kugelförmigen Kugeln (10) an der Hauptfläche (3a) der Glasscheibe einen Durchmesser (H2) zwischen 0,1 mm und 0,8 mm, beispielsweise zwischen 0,2 mm und 0,6 mm, beispielsweise zwischen 0,25 mm und 0,45 mm, aufweisen.

13. Verfahren nach einem der vorhergehenden Ansprüche, wobei die Evakuierung des Spalts (6) mittels einer Pumpe (11) auf einen Druck in dem Spalt (6) von unter 0,005 mbar, beispielsweise unter 0,003 mbar, beispielsweise auf unter 0,002 mbar, bereitgestellt wird.

14. Verfahren nach einem der vorhergehenden Ansprüche, wobei die maximale Breite (W1) der Stützstruktur (5) mindestens 1,5-mal oder mindestens 1,8-mal größer, vorzugsweise mindestens 2-mal größer, beispielsweise mindestens 2,4-mal größer oder mindestens 2,8-mal größer ist als die Höhe (H1) der Stützstruktur (5).

15. Verfahren nach einem der vorhergehenden Ansprüche, wobei die plastische Verformung der massiven kugelförmigen Kugeln (10) mittels der Hauptflächen (3a, 4a) bereitgestellt wird, sodass die Anfangshöhe (H2) einer Vielzahl der massiven kugelförmigen Kugeln (10) um mindestens 40 % auf die verringerte Stützstrukturhöhe (H1) reduziert wird.

16. Vakuumisolierglaseinheit (1), hergestellt mittels eines Verfahrens nach einem der vorhergehenden Ansprüche, wobei die Vakuumisolierglaseinheit (1) umfasst:
eine erste thermisch vorgespannte Glasscheibe (3) und eine zweite thermisch vorgespannte Glasscheibe (4), und
eine Vielzahl massiver, plastisch verformter Stützstrukturen (5), die eine erste Kontaktfläche (5a) und eine zweite gegenüberliegende Kontaktfläche (5b) umfassen, wobei die Stützstrukturen (5) in dem evakuierten, versiegelten Spalt (6) zwischen gegenüberliegenden Hauptflächen (3a, 4a) der thermisch vorgespannten Glasscheiben (3, 4) verteilt sind,
wobei der gegenseitige Abstand zwischen benachbarten Stützstrukturen (5) über 30 mm beträgt,
wobei die plastisch verformten Stützstrukturen (5) eine erste konvexe Seitenfläche (5c) und eine zweite gegenüberliegende konvexe Seitenfläche (5d), in einem Querschnitt der plastisch verformten Stützstruktur (5) gesehen, umfassen, wobei sich die konvexen Seitenflächen (5c, 5d) zwischen den Hauptflächen (3a, 4a) der Glasscheiben erstrecken, und wobei die konvexen Seitenflächen (5c, 5d) jeweils kleine kreisförmige Bögen (92) mit nicht zusammenfallenden Mittelpunkten (C1, C2) beschreiben,
wobei die Kontaktflächen (5a, 5b) der Stützstrukturen (5) durch die Glasscheiben (3, 4) bereitgestellt und geformt sind, sodass sie sich teilweise in die jeweilige Hauptfläche (3a, 4a) der Glasscheibe hinein erstrecken.

## Revendications

1. Procédé de production d'une unité de vitrage isolant sous vide (VIG) (1), dans lequel ledit procédé comprend :
- la distribution d'une pluralité de structures de support (5) sur une première feuille de verre trempé (3), de sorte que les structures de support reposent sur une première surface principale (3a) de la première feuille de verre trempé (3), et de sorte que la distance minimale (DIS1) entre des structures de support adjacentes soit d'au moins 30 mm,
- l'agencement d'une seconde feuille de verre trempé (4), de sorte que les structures de support distribuées (5) soient disposées dans un espace (6) entre la première surface principale (3a) et une seconde surface principale (4a) de la seconde feuille de verre trempé (4),
- la réalisation d'un joint périphérique autour de la périphérie des feuilles de verre (3, 4),
- l'évacuation dudit espace (6),
- le scellement de l'espace évacué (6),
dans lequel les structures de support fournies (5) agencées sur la première surface principale (3a) comprennent des billes sphériques pleines (10),
dans lequel une déformation plastique des billes sphériques pleines (10) est produite au moyen desdites surfaces principales (3a, 4a), de sorte que la hauteur initiale (H2) d'une pluralité des billes sphériques pleines (10) soit réduite d'au moins 10 %, telle que d'au moins 20 %, telle que d'au moins 40 %, jusqu'à une hauteur réduite de structure de support (H1), aplatissant et agrandissant ainsi des surfaces de contact opposées (5a, 5b) des structures de support (5) en contact avec les première et seconde surfaces principales (3a, 4a), respectivement,
**caractérisé en ce que**
les surfaces de contact (5a, 5b) des structures de support (5) sont formées et façonnées par les feuilles de verre (3, 4) de manière à s'étendre partiellement dans la surface de feuille de verre respective (3a, 4a).

2. Procédé selon la revendication 1, dans lequel les billes sphériques pleines (10) comprennent ou sont constituées d'un métal tel que de l'acier, tel qu'une structure monolithique en acier.

3. Procédé selon l'une quelconque des revendications précédentes, dans lequel le matériau des billes sphériques pleines (10) présente un module de Young compris entre 170 GPa et 280 GPa, tel qu'entre 180 GPa et 230 GPa à 20 °C.

4. Procédé selon l'une quelconque des revendications précédentes, dans lequel la distance mutuelle (DIS1) entre des structures de support adjacentes (5) sur la surface de feuille de verre (3a) est comprise entre 30 mm et 60 mm, telle qu'entre 35 mm et 45 mm, par exemple entre 38 mm et 42 mm.

5. Procédé selon l'une quelconque des revendications précédentes, dans lequel une pluralité desdites structures de support déformées plastiquement (5) comprend une première surface latérale convexe (5c) et une seconde surface latérale convexe opposée (5d), vues dans une section transversale de la structure de support déformée plastiquement (5), lesdites surfaces latérales convexes (5c, 5d) s'étendant entre les surfaces principales des feuilles de verre (3a, 4a), et dans lequel les surfaces latérales convexes (5c, 5d) peuvent chacune décrire des arcs circulaires mineurs (92) ayant des centres non coïncidents (C1, C2).

6. Procédé selon l'une quelconque des revendications précédentes, dans lequel la largeur maximale (W1) de chacune d'une pluralité des structures de support (5) dans l'espace (6), après la déformation plastique, est supérieure, telle qu'au moins 10 % supérieure, par exemple 20 % supérieure, par exemple au moins 40 % supérieure, au diamètre initial (H2) des billes sphériques pleines (10) avant la déformation plastique.

7. Procédé selon l'une quelconque des revendications précédentes, dans lequel les feuilles de verre trempé (3, 4) sont des feuilles de verre trempé thermiquement, et dans lequel une pluralité des structures de support (5) peut être soumise à une déformation plastique variable en réponse à des irrégularités de surface (3a, 4a) des feuilles de verre trempé thermiquement (3, 4), de manière à présenter des hauteurs réduites différentes (H1).

8. Procédé selon l'une quelconque des revendications précédentes, dans lequel les billes sphériques pleines (10) sont maintenues en position sur la première surface principale (3a) au moyen d'un agencement de maintien de structures de support (80), tel qu'un agencement temporaire de maintien de structures de support (80), dans lequel l'agencement de maintien de structures de support (80) est agencé à l'extérieur de l'espace (6) et/ou dans lequel l'agencement temporaire de maintien de structures de support comprend un agencement de maintien magnétique, et/ou un gabarit.

9. Procédé selon l'une quelconque des revendications précédentes, dans lequel au moins une partie de la déformation plastique des billes sphériques pleines (10), au moyen desdites surfaces principales (3a, 4a), est produite par évacuation de l'espace (6) sous une pression environnante telle que la pression atmosphérique, et/ou dans lequel au moins une partie de la déformation plastique des billes sphériques pleines (10), au moyen desdites surfaces principales (3a, 4a), est produite au moyen d'un agencement mécanique externe de pressage (300) configuré pour appliquer une force de compression (F) sur des surfaces principales extérieures d'un assemblage d'unité VIG (50) comprenant lesdites feuilles de verre (3, 4), dans lequel l'agencement mécanique externe de pressage (300) peut comprendre des corps de pressage (310, 320), un ou plusieurs actionneurs (330) et un dispositif de commande matériel (340) configuré pour commander le ou les actionneurs (330).

10. Procédé selon l'une quelconque des revendications précédentes, dans lequel la largeur maximale (W1) de chacune d'une pluralité des structures de support (5) dans l'espace (6), après la déformation plastique, est supérieure de 3 % à 120 %, telle que de 5 % à 85 %, par exemple de 20 % à 65 %, au diamètre (H2) des billes sphériques pleines (10) avant la déformation plastique.

11. Procédé selon l'une quelconque des revendications précédentes, dans lequel l'une ou les deux feuilles de verre trempé (3, 4) présentent une épaisseur comprise entre 2 mm et 6 mm, telle qu'entre 2 mm et 4 mm, par exemple entre 2,5 mm et 3,5 mm, bornes comprises.

12. Procédé selon l'une quelconque des revendications précédentes, dans lequel les billes sphériques pleines (10) sur la surface principale de feuille de verre (3a) présentent un diamètre (H2) compris entre 0,1 mm et 0,8 mm, tel qu'entre 0,2 mm et 0,6 mm, tel qu'entre 0,25 mm et 0,45 mm.

13. Procédé selon l'une quelconque des revendications précédentes, dans lequel l'évacuation de l'espace (6) est réalisée au moyen d'une pompe (11) jusqu'à une pression de l'espace (6) inférieure à 0,005 mbar, telle qu'inférieure à 0,003 mbar, telle qu'inférieure à 0,002 mbar.

14. Procédé selon l'une quelconque des revendications précédentes, dans lequel la largeur maximale (W1) de la structure de support (5) est au moins 1,5 fois ou au moins 1,8 fois supérieure, de préférence au moins 2 fois supérieure, telle qu'au moins 2,4 fois supérieure ou au moins 2,8 fois supérieure, à la hauteur (H1) de la structure de support (5).

15. Procédé selon l'une quelconque des revendications précédentes, dans lequel la déformation plastique des billes sphériques pleines (10) est produite au moyen desdites surfaces principales (3a, 4a), de sorte que la hauteur initiale (H2) d'une pluralité des billes sphériques pleines (10) soit réduite d'au moins 40 % jusqu'à la hauteur réduite de structure de support (H1).

16. Unité de vitrage isolant sous vide (1) produite au moyen d'un procédé selon l'une quelconque des revendications précédentes, dans laquelle l'unité de vitrage isolant sous vide (1) comprend
une première feuille de verre trempé thermiquement (3) et une seconde feuille de verre trempé thermiquement (4), et
une pluralité de structures de support pleines, déformées plastiquement (5), comprenant une première surface de contact (5a) et une seconde surface de contact opposée (5b), dans laquelle les structures de support (5) sont distribuées dans l'espace évacué et scellé (6) entre des surfaces principales opposées (3a, 4a) des feuilles de verre trempé thermiquement (3, 4),
dans laquelle la distance mutuelle entre des structures de support adjacentes (5) est supérieure à 30 mm,
dans laquelle les structures de support déformées plastiquement (5) comprennent une première surface latérale convexe (5c) et une seconde surface latérale convexe opposée (5d), vues dans une section transversale (Fig. 4) de la structure de support déformée plastiquement (5), lesdites surfaces latérales convexes (5c, 5d) s'étendant entre les surfaces principales des feuilles de verre (3a, 4a), et dans laquelle les surfaces latérales convexes (5c, 5d) décrivent chacune des arcs circulaires mineurs (92) ayant des centres non coïncidents (C1, C2),
dans laquelle les surfaces de contact (5a, 5b) des structures de support (5) sont formées et façonnées par les feuilles de verre (3, 4) de manière à s'étendre partiellement dans la surface principale respective de feuille de verre (3a, 4a).
